# EUROPEAN PATENT APPLICATION

(11) **EP 4 358 584 A1**
(43) Date of publication of application: **24.04.2024**
(21) Application number: 22845168.8
(22) Date of filing: 11.07.2022
(51) Int. Cl.: H04W 28/24

(54) **COMMUNICATION METHOD AND COMMUNICATION APPARATUS**

(30) Priority: 23.07.2021 CN 202110835106
(71) Applicant: Huawei Technologies Co., Ltd., Longgang Shenzhen, Guangdong 518129 (CN)
(72) Inventor: YU, Youyang, Shenzhen, Guangdong 518129 (CN)
(74) Representative: Gill Jennings & Every LLP
(86) International application number: PCT/CN2022/104831
(87) International publication number: WO 2023/001003

(57) **Abstract**

This application provides a communication method and apparatus. The method includes: A core network element configures first parameter information. The first parameter information is quality of service QoS control parameter information of a non-3rd generation partnership project N3GPP access technology, and the first parameter information is used to perform QoS control on a service flow data packet transmitted by a first terminal device by using the N3GPP access technology. The core network element sends the first parameter information. In this application, a QoS control parameter of the N3GPP access technology is configured in the core network element, and the parameter is delivered to an N3GPP access side, so that QoS control policies can be unified when the core network element and the N3GPP access side perform QoS control on the service flow data packet. This avoids poor user experience caused by a conflict of the QoS control policies.

## Description

This application claims priority to Chinese Patent Application No. 202110835106.3, filed with the China National Intellectual Property Administration on July 23, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

A 5G network architecture proposed by the 3rd generation partnership project (3rd generation partnership project, 3GPP) standard group not only supports access to a core network (core network, CN) by using a 3GPP access technology, for example, a long term evolution (long term evolution, LTE) system, or access to a core network by using a 5G radio access network (radio access network, RAN) device; but supports access to a core network by using a non-3rd generation partnership project (non-3GPP, N3GPP) access technology, that is, by using an N3GPP interworking function (N3GPP interworking function, N3IWF) or a next generation packet data gateway (next generation packet data gateway, ngPDG).

A core network function includes a user plane function (user plane function, UPF) network element and a control plane function (control plane function, CPF) network element. The user plane function network element is mainly responsible for forwarding a data packet, controlling quality of service (quality of service, QoS), collecting charging information, and the like. The control plane function network element is mainly responsible for user registration and authentication, mobility management, delivery of a packet forwarding policy and a QoS control policy to the user plane function network element, and the like.

In the conventional technology, QoS control management for accessing a network by a terminal device by using a 3GPP access technology is mature. However, QoS control management for accessing a network by a terminal device by using an N3GPP access technology is an urgent problem to be resolved currently.

### SUMMARY

This application provides a communication method and apparatus to unify QoS control policies of a core network element and an N3GPP access side, thereby avoiding poor user experience caused by a conflict of the QoS control policies.

According to a first aspect, a communication method is provided. The method may be performed by a core network element, or may be performed by a chip or a circuit disposed in the core network element. This is not limited in this application. The method includes: The core network element configures first parameter information. The first parameter information is quality of service QoS control parameter information of a non-3rd generation partnership project N3GPP access technology, and the first parameter information is used to perform QoS control on a service flow data packet transmitted by a first terminal device by using the N3GPP access technology. The core network element sends the first parameter information.

Based on the foregoing solution, in this application, a QoS control parameter of the N3GPP access technology is configured in the core network element (for example, a unified data management UDM network element and a unified data repository UDR network element), and the QoS control parameter is sent to N3GPP access sides (including an N3GPP access device and a terminal device), so that QoS control policies can be unified when the core network element and the N3GPP access side perform QoS control on the service flow data packet transmitted by using the N3GPP access technology. This improves user experience.

With reference to the first aspect, in a possible implementation of the first aspect, the first parameter information includes at least one of a connection QoS parameter of the N3GPP access technology, bandwidth at a terminal device granularity, and a terminal device priority. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

It should be understood that the first parameter information may be a channel access parameter, for example, a distributed channel access (enhanced distributed channel access, EDCA) parameter, of a specific N3GPP access technology, or may be the 5G QoS identifier. In other words, the first parameter information may be the correspondence between a 5QI and a channel access parameter or a correspondence between an N3GPP connection QoS identifier and a channel QoS parameter. The correspondence may be used by the N3GPP access side to determine a specific channel access parameter based on the 5QI or the QoS identifier.

With reference to the first aspect, in a possible implementation of the first aspect, before the core network element sends the first parameter information, the core network element receives first indication information. The first indication information indicates that the first terminal device accesses the core network element by using the N3GPP access technology. The core network element determines the QoS control parameter information based on the first indication information.

Based on the foregoing solution, when learning that the first terminal device accesses a network by using the N3GPP access technology, the core network element delivers the QoS control parameter information to the N3GPP access side. When learning that the first terminal device accesses the network by using a 3GPP access technology, the core network element delivers a QoS control parameter of the 3GPP access technology to 3GPP access sides (including 3GPP access devices such as a radio access network RAN device and a terminal device).

With reference to the first aspect, in a possible implementation of the first aspect, the core network element obtains mapping relationship information. The mapping relationship information indicates correspondences between a plurality of groups of QoS control parameter information and a plurality of identifiers. The core network element determines, as the first parameter information based on the mapping relationship information, QoS control parameter information corresponding to a first identifier. The first identifier is a related identifier that is of the N3GPP access technology and that is used by the first terminal device.

It should be understood that the first parameter information is one of the plurality of groups of QoS control parameter information.

With reference to the first aspect, in a possible implementation of the first aspect, the first identifier includes at least one of a location area identifier and a network identifier.

With reference to the first aspect, in a possible implementation of the first aspect, the core network element configures correspondences between a plurality of location area identifiers and a plurality of groups of QoS control parameter information, and/or correspondences between a plurality of network identifiers and a plurality of groups of QoS control parameter information.

Based on the foregoing solution, in addition to configuring the first parameter information, the core network element may further configure correspondences between a plurality of groups of QoS control parameter information and a plurality of pieces of N3GPP network related information, for example, configure the correspondences between a plurality of groups of QoS control parameter information and a plurality of location area identifiers. When the first indication information received by the core network element includes the location area identifier (or the network identifier), the core network element may determine, from the plurality of groups of QoS control parameter information based on the location area identifier (or the network identifier), one group of QoS control parameter information, namely, the first parameter information, corresponding to the location area identifier (or the network identifier). In other words, when configuring the QoS control parameter information, the core network element already configures that an N3GPP network corresponding to QoS control parameter information corresponds to a location area identifier (or a network identifier).

According to a second aspect, a communication method is provided. The method may be performed by an N3GPP access network device, or may be performed by a chip or a circuit disposed in the N3GPP access network device. This is not limited in this application. The method includes: The N3GPP access network device receives first parameter information. The first parameter information is QoS control parameter information of an N3GPP access technology. The N3GPP access network device performs, based on the first parameter information, QoS control on a service flow data packet transmitted by a first terminal device by using the N3GPP access technology.

The N3GPP access network device may locally prestore or configure QoS control parameter information. The prestored or configured QoS control parameter information may be inconsistent with QoS control parameter information delivered by a core network element. Therefore, the N3GPP access network device performs, based on the QoS control parameter information, for example, the first parameter information, that is received from the core network element and that is used for the N3GPP access technology, QoS control on the service flow data packet transmitted by the first terminal device by using the N3GPP access technology. In this way, QoS control policies of the core network element and an N3GPP access side that are in the N3GPP access technology can be unified, thereby improving user experience.

With reference to the second aspect, in a possible implementation of the second aspect, the N3GPP access network device receives a first terminal identifier from an N3GPP access gateway. The first terminal identifier is an identifier of the first terminal device in an N3GPP access network. The N3GPP access network device determines the service flow data packet based on the first terminal identifier.

Based on the foregoing solution, the N3GPP access gateway allocates, to the first terminal device, the first terminal identifier specifically used for N3GPP access. This can enable the first terminal device and the access network device to distinguish between QoS control parameter information for 3GPP access and QoS control parameter information for the N3GPP access by using the first identifier.

With reference to the second aspect, in a possible implementation of the second aspect, the first parameter information includes at least one of a connection QoS parameter of the N3GPP access technology, bandwidth at a terminal device granularity, and a terminal device priority. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

With reference to the second aspect, in a possible implementation of the second aspect, the N3GPP access network device receives information about a correspondence between service flow description information and an N3GPP connection QoS identifier. The service flow description information is used to determine the service flow data packet.

With reference to the second aspect, in a possible implementation of the second aspect, the channel access parameter of the N3GPP access technology includes a correspondence between an N3GPP connection QoS identifier and a channel QoS parameter. The N3GPP access network device determines a channel QoS parameter of the service flow data packet according to the correspondence between service flow description information and an N3GPP connection QoS identifier, and the correspondence between an N3GPP connection QoS identifier and a channel QoS parameter; and performs, based on the channel QoS parameter, QoS control on the service flow data packet transmitted by the first terminal device by using the N3GPP access technology.

According to a third aspect, a communication method is provided. The method may be performed by a first terminal device, or may be performed by a chip or a circuit disposed in the first terminal device. This is not limited in this application. The method includes: The first terminal device receives first parameter information. The first parameter information is QoS control parameter information of a non-3rd generation partnership project N3GPP access technology. The first terminal device performs, based on the first parameter information, QoS control on a service flow data packet transmitted by the first terminal device by using the N3GPP access technology.

Based on the foregoing solution, the first terminal device performs, based on the QoS control parameter information that is received from a core network element and that is used for the N3GPP access technology, QoS control on the service flow data packet transmitted by the first terminal device by using the N3GPP access technology. In this way, QoS control policies in the N3GPP access technology can be unified, thereby improving user experience.

With reference to the third aspect, in a possible implementation of the third aspect, the Q first parameter information includes at least one of a connection QoS parameter of the N3GPP access technology and bandwidth at a terminal device granularity. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

With reference to the third aspect, in a possible implementation of the third aspect, the service flow data packet includes a first terminal identifier, and the first terminal identifier is an identifier of the first terminal device in an N3GPP access network.

With reference to the third aspect, in a possible implementation of the third aspect, the channel access parameter of the N3GPP access technology includes a correspondence between an N3GPP connection QoS identifier and a channel QoS parameter. The first terminal device determines the channel QoS parameter based on the N3GPP connection QoS identifier; and performs, based on the channel QoS parameter, QoS control on the service flow data packet transmitted by the first terminal device by using the N3GPP access technology.

With reference to the third aspect, in a possible implementation of the third aspect, the first terminal device receives information about a correspondence between an N3GPP connection QoS identifier and service flow description information. The first terminal device determines, based on the service flow description information and the information about the correspondence between an N3GPP connection QoS identifier and service flow description information, an N3GPP connection QoS identifier corresponding to the service flow data packet.

According to a fourth aspect, a communication method is provided. The method may be performed by an N3GPP access gateway, or may be performed by a chip or a circuit disposed in the N3GPP access gateway. This is not limited in this application. The method includes: The non-3rd generation partnership project N3GPP access gateway receives first parameter information. The first parameter information is quality of service QoS control parameter information of an N3GPP access technology. The N3GPP access gateway sends the QoS control parameter information to an N3GPP access network device or a first terminal device. The first parameter information is used to perform QoS control on a service flow data packet transmitted by the first terminal device by using the N3GPP access technology.

With reference to the fourth aspect, in a possible implementation of the fourth aspect, the N3GPP access gateway determines a first terminal identifier. The first terminal identifier is an identifier of the first terminal device in an N3GPP access network. The N3GPP access gateway sends the first terminal identifier to the N3GPP access network device.

With reference to the fourth aspect, in a possible implementation of the fourth aspect, the first parameter information includes at least one of a connection QoS parameter of the N3GPP access technology, bandwidth at a terminal device granularity, and a terminal device priority. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

With reference to the fourth aspect, in a possible implementation of the fourth aspect, the N3GPP access gateway determines information about a correspondence between service flow description information and an N3GPP connection QoS identifier. The service flow description information is used to determine the service flow data packet. The N3GPP access gateway sends the information about the correspondence between service flow description information and an N3GPP connection QoS identifier to the first terminal device or the N3GPP access network device.

With reference to the fourth aspect, in a possible implementation of the fourth aspect, the N3GPP access gateway determines the information about the correspondence between service flow description information and an N3GPP connection QoS identifier according to a correspondence between service flow description information and a 5QI, and the correspondence between a 5QI and a channel access parameter of an N3GPP access technology.

According to a fifth aspect, a communication apparatus is provided. The apparatus may be a core network element, or the apparatus may be a chip or a circuit disposed in the core network element. This is not limited in this application. The apparatus includes a transceiver unit and a processing unit. The processing unit is configured to configure first parameter information. The first parameter information is quality of service QoS control parameter information of a non-3rd generation partnership project N3GPP access technology, and the first parameter information is used to perform QoS control on a service flow data packet transmitted by a first terminal device by using the N3GPP access technology. The transceiver unit is configured to send the first parameter information.

Based on the foregoing solution, in this application, a QoS control parameter of the N3GPP access technology is configured in the core network element (for example, a unified data management UDM network element and a unified data repository UDR network element), and the QoS control parameter is sent to N3GPP access sides (including an N3GPP access device and the first terminal device), so that QoS control policies can be unified when the core network element and the N3GPP access side perform QoS control on the service flow data packet transmitted by using the N3GPP access technology. This improves user experience.

With reference to the fifth aspect, in a possible implementation of the fifth aspect, the first parameter information includes at least one of a connection QoS parameter of the N3GPP access technology, bandwidth at a terminal device granularity, and a terminal device priority. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

With reference to the fifth aspect, in a possible implementation of the fifth aspect, before the transceiver unit sends the first parameter information, the transceiver unit is further configured to receive first indication information. The first indication information indicates that the first terminal device accesses the core network element by using the N3GPP access technology. The processing unit is further configured to determine the first parameter information based on the first indication information.

With reference to the fifth aspect, in a possible implementation of the fifth aspect, the processing unit is specifically configured to obtain mapping relationship information. The mapping relationship information indicates correspondences between a plurality of groups of QoS control parameter information and a plurality of identifiers. The processing unit is further configured to determine, as the first parameter information based on the mapping relationship information, QoS control parameter information corresponding to a first identifier. The first identifier is a related identifier that is of the N3GPP access technology and that is used by the first terminal device.

With reference to the fifth aspect, in a possible implementation of the fifth aspect, the first identifier includes at least one of a location area identifier and a network identifier.

With reference to the fifth aspect, in a possible implementation of the fifth aspect, the processing unit is further configured to configure correspondences between a plurality of location area identifiers and a plurality of groups of QoS control parameter information, and/or correspondences between a plurality of network identifiers and a plurality of groups of QoS control parameter information.

According to a sixth aspect, a communication apparatus is provided. The apparatus may be an N3GPP access network device, or the apparatus may be a chip or a circuit disposed in the N3GPP access network device. This is not limited in this application. The apparatus includes a transceiver unit and a processing unit. The transceiver unit is configured to receive first parameter information. The first parameter information is QoS control parameter information of an N3GPP access technology. The processing unit is configured to perform, based on the first parameter information, QoS control on a service flow data packet transmitted by a first terminal device by using the N3GPP access technology.

The N3GPP access network device may locally prestore or configure QoS control parameter information. Because QoS control parameter information delivered by a core network element may be used for QoS control of a 3GPP access technology, the prestored or configured QoS control parameter information may be inconsistent with the QoS control parameter information delivered by the core network element. Therefore, the N3GPP access network device performs, based on the QoS control parameter information that is received from the core network element and that is used for the N3GPP access technology, QoS control on the service flow data packet transmitted by the first terminal device by using the N3GPP access technology. In this way, QoS control policies of the core network element and an N3GPP access side that are in the N3GPP access technology can be unified, thereby improving user experience.

With reference to the sixth aspect, in a possible implementation of the sixth aspect, the transceiver unit is further configured to receive a first terminal identifier from an N3GPP access gateway. The first terminal identifier is an identifier of the first terminal device in an N3GPP access network. The processing unit is further configured to determine the service flow data packet based on the first terminal identifier.

With reference to the sixth aspect, in a possible implementation of the sixth aspect, the first parameter information includes at least one of a connection QoS parameter of the N3GPP access technology, bandwidth at a terminal device granularity, and a terminal device priority. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

With reference to the sixth aspect, in a possible implementation of the sixth aspect, the transceiver unit is further configured to receive information about a correspondence between service flow description information and an N3GPP connection QoS identifier. The service flow description information is used to determine the service flow data packet.

With reference to the sixth aspect, in a possible implementation of the sixth aspect, the channel access parameter of the N3GPP access technology includes a correspondence between an N3GPP connection QoS identifier and a channel QoS parameter. The processing unit is specifically configured to determine a channel QoS parameter of the service flow data packet according to the correspondence between service flow description information and an N3GPP connection QoS identifier, and the correspondence between an N3GPP connection QoS identifier and a channel QoS parameter. The processing unit is further configured to perform, based on the channel QoS parameter, QoS control on the service flow data packet transmitted by the first terminal device by using the N3GPP access technology.

According to a seventh aspect, a communication apparatus is provided. The apparatus may be a first terminal device, or the apparatus may be a chip or a circuit disposed in the first terminal device. This is not limited in this application. The apparatus includes a transceiver unit and a processing unit. The transceiver unit is configured to receive first parameter information. The first parameter information is QoS control parameter information of a non-3rd generation partnership project N3GPP access technology. The processing unit is configured to perform, based on the first parameter information, QoS control on a service flow data packet transmitted by the first terminal device by using the N3GPP access technology.

Based on the foregoing solution, the first terminal device performs, based on the QoS control parameter information that is received from a core network element and that is used for the N3GPP access technology, QoS control on the service flow data packet transmitted by the first terminal device by using the N3GPP access technology. In this way, QoS control policies in the N3GPP access technology can be unified, thereby improving user experience.

With reference to the seventh aspect, in a possible implementation of the seventh aspect, the first parameter information includes at least one of a connection QoS parameter of the N3GPP access technology and bandwidth at a terminal device granularity. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

With reference to the seventh aspect, in a possible implementation of the seventh aspect, the service flow data packet includes a first terminal identifier, and the first terminal identifier is an identifier of the first terminal device in an N3GPP access network.

With reference to the seventh aspect, in a possible implementation of the seventh aspect, the channel access parameter of the N3GPP access technology includes a correspondence between an N3GPP connection QoS identifier and a channel QoS parameter. The processing unit is specifically configured to determine the channel QoS parameter based on the N3GPP connection QoS identifier. The processing unit is further configured to perform, based on the channel QoS parameter, QoS control on the service flow data packet transmitted by the first terminal device by using the N3GPP access technology.

With reference to the seventh aspect, in a possible implementation of the seventh aspect, the transceiver unit is specifically configured to receive information about a correspondence between an N3GPP connection QoS identifier and service flow description information. The processing unit is specifically configured to determine, based on the service flow description information and the information about the correspondence between an N3GPP connection QoS identifier and service flow description information, an N3GPP connection QoS identifier corresponding to the service flow data packet.

According to an eighth aspect, a communication apparatus is provided. The apparatus may be an N3GPP access gateway, or the apparatus may be a chip or a circuit disposed in the N3GPP access gateway. This is not limited in this application. The apparatus includes a transceiver unit and a processing unit. The transceiver unit is configured to receive first parameter information. The first parameter information is quality of service QoS control parameter information of an N3GPP access technology. The transceiver unit is further configured to send the first parameter information to an N3GPP access network device or a first terminal device. The first parameter information is used to perform QoS control on a service flow data packet transmitted by the first terminal device by using the N3GPP access technology.

With reference to the eighth aspect, in a possible implementation of the eighth aspect, the processing unit is configured to determine a first terminal identifier. The first terminal identifier is an identifier of the first terminal device in an N3GPP access network. The transceiver unit is further configured to send the first terminal identifier to the N3GPP access network device.

With reference to the eighth aspect, in a possible implementation of the eighth aspect, the first parameter information includes at least one of a connection QoS parameter of the N3GPP access technology, bandwidth at a terminal device granularity, and a terminal device priority. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

With reference to the eighth aspect, in a possible implementation of the eighth aspect, the processing unit is specifically configured to determine information about a correspondence between service flow description information and an N3GPP connection QoS identifier. The service flow description information is used to determine the service flow data packet. The transceiver unit is further configured to send the information about the correspondence between service flow description information and an N3GPP connection QoS identifier to the first terminal device or the N3GPP access network device.

With reference to the eighth aspect, in a possible implementation of the eighth aspect, the processing unit is specifically configured to determine the information about the correspondence between service flow description information and an N3GPP connection QoS identifier according to a correspondence between service flow description information and a 5QI, and the correspondence between a 5QI and a channel access parameter of an N3GPP access technology.

According to a ninth aspect, a communication apparatus is provided. The apparatus may be the core network element in the first aspect, an electronic device disposed in the core network element, or a large device including the core network element. The apparatus is configured to perform the method provided in the first aspect.

The apparatus includes a processor. The processor is coupled to a memory, and may be configured to execute instructions in the memory to implement the method according to any one of the first aspect and the possible implementations of the first aspect. Optionally, the apparatus further includes the memory. The memory and the processor may be separately deployed, or may be centrally deployed. Optionally, the apparatus further includes a communication interface, and the processor is coupled to the communication interface.

In an implementation, the communication interface may be a transceiver or an input/output interface.

In another implementation, the apparatus is a chip disposed in the core network element. When the apparatus is the chip disposed in the core network element, the communication interface may be an input/output interface, an interface circuit, an output circuit, an input circuit, a pin, a related circuit, or the like on the chip or a chip system. The processor may alternatively be a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by but not limited to a receiver, a signal output by the output circuit may be output to but not limited to a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a tenth aspect, a communication apparatus is provided. The apparatus may be the N3GPP access network device in the second aspect, the first terminal device in the third aspect, or the N3GPP access gateway in the fourth aspect. The apparatus is configured to perform the method provided in the second aspect, the third aspect, or the fourth aspect. The apparatus includes a transceiver.

Optionally, the apparatus further includes a memory. The processor is coupled to the memory, and may be configured to execute instructions in the memory to implement the communication method according to any one of the second aspect to the fourth aspect and the possible implementations of the second aspect to the fourth aspect. Optionally, the communication apparatus further includes the memory. The memory and the processor may be separately deployed, or may be centrally deployed. Optionally, the apparatus further includes a communication interface, and the processor is coupled to the communication interface.

In an implementation, the communication interface may be a transceiver or an input/output interface.

In another implementation, the apparatus is a chip disposed in the N3GPP access network device, the first terminal device, or the N3GPP access gateway. When the apparatus is the chip disposed in the N3GPP access network device, the first terminal device, or the N3GPP access gateway, the communication interface may be an input/output interface, an interface circuit, an output circuit, an input circuit, a pin, a related circuit, or the like on the chip or a chip system. The processor may alternatively be a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by but not limited to a receiver, a signal output by the output circuit may be output to but not limited to a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a computer program product is provided. The computer program product includes a computer program (which may also be referred to as code or instructions). When the computer program is run, a computer is enabled to perform the method according to any one of the first aspect to the fourth aspect and the possible implementations of the first aspect to the fourth aspect.

According to a twelfth aspect, a computer-readable storage medium is provided. The computer-readable storage medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a thirteenth aspect, a communication system is provided, including the foregoing core network element, N3GPP access network device, and first terminal device. Optionally, the communication system further includes an N3GPP access gateway.

### BRIEF DESCRIPTION OF DRAWINGS

FIG. 1 is a schematic diagram of a network architecture accessed over a 3GPP access technology according to an embodiment of this application;
FIG. 2 to FIG. 4 are schematic diagrams of network architectures accessed over an N3GPP access technology according to an embodiment of this application;
FIG. 5A and FIG. 5B are a schematic flowchart of a communication method according to an embodiment of this application;
FIG. 6 is a flowchart of a communication method applied to an N3GPP network architecture according to an embodiment of this application;
FIG. 7 is a flowchart of a communication method applied to another N3GPP network architecture according to an embodiment of this application;
FIG. 8 is a flowchart of a communication method applied to still another N3GPP network architecture according to an embodiment of this application;
FIG. 9 is a schematic block diagram of a communication apparatus according to an embodiment of this application;
FIG. 10 is a schematic block diagram of another communication apparatus according to an embodiment of this application;
FIG. 11 is a schematic diagram of a structure of a communication apparatus according to an embodiment of this application; and
FIG. 12 is a schematic diagram of a structure of another communication apparatus according to an embodiment of this application.

### DESCRIPTION OF EMBODIMENTS

The following describes technical solutions of this application with reference to accompanying drawings.

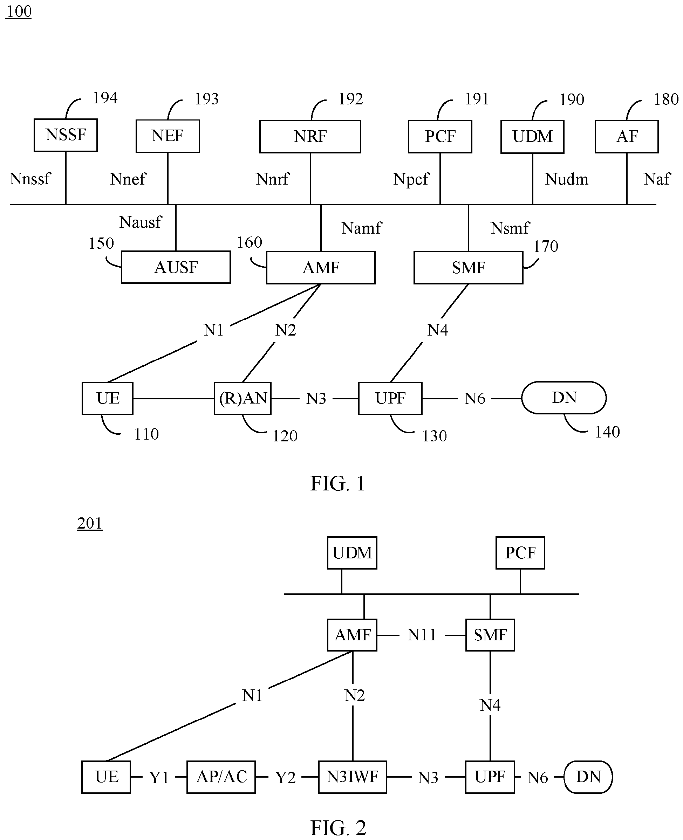

FIG. 1 is a schematic diagram of a network architecture accessed over a 3GPP access technology according to an embodiment of this application. As shown in FIG. 1, the network architecture 100 may include user equipment 110, alan (radio) access network device 120, a user plane network element 130, a data network 140, an authentication server 150, a mobility management network element 160, a session management network element 170, an application network element 180, a unified data management network element 190, a policy control network element 191, a network repository function network element 192, a network exposure network element 193, a network slice selection function network element 194, and the like. The following separately describes the network elements in the network architecture.
1. The user equipment (user equipment, UE) 110 may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.
   The wearable device may also be referred to as a wearable smart device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and that need to work with other devices such as smartphones, for example, various smart bands or smart jewelry for monitoring physical signs.
2. The (radio) access network (radio access network, (R)AN) device 120 may also be referred to as an access device. The (R)AN can manage a radio resource, provide an access service for user equipment, and complete forwarding of user equipment data between the user equipment and a core network. The (R)AN may also be understood as a base station in a network.

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

3. The user plane network element 130 serves as an interface connecting to the data network, and implements functions such as user plane data forwarding, charging statistics based on a session/flow level, and bandwidth throttling, that is, packet routing and forwarding, quality of service (quality of service, QoS) processing of user plane data, or the like.

In a 5G communication system, the user plane network element may be a user plane function (user plane function, UPF) network element.
4. The data network 140 provides, for example, a carrier service, Internet access, or a third-party service, and includes a server, where the server implements video source encoding, rendering, and the like. In a 5G communication system, the data network may be a data network (data network, DN).
5. The authentication server 150 performs user security authentication. In a 5G communication system, the authentication server may be an authentication server function (authentication server function, AUSF) network element.
6. The mobility management network element 160 is mainly used for mobility management, access management, and the like. In a 5G communication system, the access management network element may be an access and mobility management function (access and mobility management function, AMF), and mainly performs functions such as mobility management and access authentication/authorization. In addition, the mobility management network element is further responsible for transferring a user policy between a terminal and a policy control function (policy control function, PCF) network element.
7. The session management network element 170 is mainly configured to: manage a session, allocate and manage an Internet protocol (Internet protocol, IP) address of user equipment, select an endpoint that can manage a user plane function interface and a policy control and charging function interface, perform downlink data notification, and the like.

In a 5G communication system, the session management network element may be a session management function (session management function, SMF) network element, and completes terminal IP address allocation, UPF selection, charging, QoS policy control, and the like.
8. In a 5G communication system, the application network element 180 may be an application function (application function, AF) network element, indicating an application function of a third party or a carrier. The application network element 180 is an interface for obtaining external application data by a 5G network, and is mainly configured to transfer a requirement of an application side for a network side.
9. The unified data management network element 190 is responsible for managing a user identifier, subscription data, authentication data, and user service network element registration. In a 5G communication system, the unified data management network element may be unified data management (unified data management, UDM), and the UDM may access a specific dataset stored in a unified data repository (unified data repository, UDR) through a Nudr interface.
10. The policy control network element 191 includes a user subscription data management function, a policy control function, a charging policy control function, quality of service (quality of service, QoS) control, and the like, is configured to: guide a unified policy framework of network behavior, provide policy rule information for control plane function network elements (for example, AMF and SMF network elements), and the like.

In a 5G communication system, the policy control network element may be a PCF.
11. The network slice selection function network element 194 is responsible for selecting a network slice for UE. In a 5G communication system, the application network element may be a network slice selection function (network slice selection function, NSSF) network element.
12. The network repository function network element 192 provides a storage function and a selection function of network function entity information for another core network element. In a 5G communication system, the network element may be a network repository function (network repository function, NRF) network element.
13. In a 5G communication system, the network exposure network element 193 may be a network exposure function (network exposure function, NEF) network element, and is mainly configured to: expose a service and a capability of a 3GPP network function to an AF, and enable the AF to also provide information for the 3GPP network function.

In a future communication system, for example, a 6G communication system, the foregoing network element or device may still use a name of the network element or device in the 5G communication system, or may have another name. This is not limited in this embodiment of this application. The function of the foregoing network element or device may be implemented by an independent network element, or may be jointly implemented by several network elements. During actual deployment, network elements in a core network may be deployed on a same physical device or different physical devices. For example, in possible deployment, an AMF and an SMF may be deployed on a same physical device. For another example, a network element of a 5G core network and a network element of a 4G core network may be deployed on a same physical device. This is not limited in this embodiment of this application.

It may be understood that FIG. 1 is merely an example, and does not constitute any limitation on the protection scope of this application. A communication method provided in embodiments of this application may further relate to a network element that is not shown in FIG. 1. Certainly, the communication method provided in embodiments of this application may alternatively include only some network elements shown in FIG. 1.

In the network architecture shown in FIG. 1, the terminal is connected to the AMF through an N1 interface, the (R)AN is connected to the AMF through an N2 interface, and the (R)AN is connected to the UPF through an N3 interface. UPFs are connected to each other through an N9 interface, and the UPF is interconnected to the DN through an N6 interface. The SMF controls the UPF through an N4 interface.

It may be understood that the foregoing network architecture used in embodiments of this application is merely an example, and a network architecture applicable to embodiments of this application is not limited thereto. Any network architecture that can implement functions of the foregoing network elements is applicable to embodiments of this application.

FIG. 2 is a schematic diagram of a network architecture accessed over an N3GPP access technology according to an embodiment of this application.

When a 5G core network supports access over the N3GPP access technology, the network architecture 201 of the 5G core network is shown in FIG. 2. It can be learned from FIG. 1 that the terminal device accesses the core network by using the 3GPP access technology. To be specific, the terminal device accesses the control plane network element AMF of the core network by using the (R)AN, the (R)AN communicates with the AMF through the N2 interface, the terminal device accesses the user plane network element UPF of the core network by using the (R)AN, and the (R)AN communicates with the UPF through the N3 interface. When the terminal device accesses the core network by using the N3GPP access technology, it can be learned from FIG. 2 that the terminal device accesses the control plane network element AMF of the core network by using an N3IWF network element, the N3IWF communicates with the AMF through the N2 interface, the terminal device accesses the user plane network element UPF of the core network by using the N3IWF network element, and the N3IWF communicates with the UPF through the N3 interface. The N3IWF network element is an access gateway of the N3GPP access technology, and an N3GPP access network may be an untrusted N3GPP access network, or may be a trusted N3GPP access network. When the N3GPP access network is the untrusted N3GPP access network, the N3IWF network element is an untrusted N3IWF. Alternatively, when the N3GPP access network is the trusted N3GPP access network, the N3IWF network element is a trusted N3IWF. The N3GPP access network may be a WLAN access network, and the WLAN access network includes a trusted WLAN access gateway and an untrusted WLAN access gateway. An access network device such as an access point (access point, AP)/access controller (access controller, AC), for example, a wireless local area network access point (wireless local area network AP, WLAN AP), is further included between the terminal device and the N3IWF network element. The terminal device communicates with the AP/AC through a Y1 interface, and the AP/AC communicates with the N3IWF network element through a Y2 interface. Functions and communication interfaces of UDM, a PCF, an SMF, the UPF, and a DN shown in FIG. 2 are the same as those described in FIG. 1. Details are not described herein again.

In the network architecture 201 shown in FIG. 2, the terminal device may be directly connected to the 5GC, in other words, the terminal device may communicate with the AMF through the N1 interface. Specifically, the terminal device communicates with the AMF by using a NAS message.

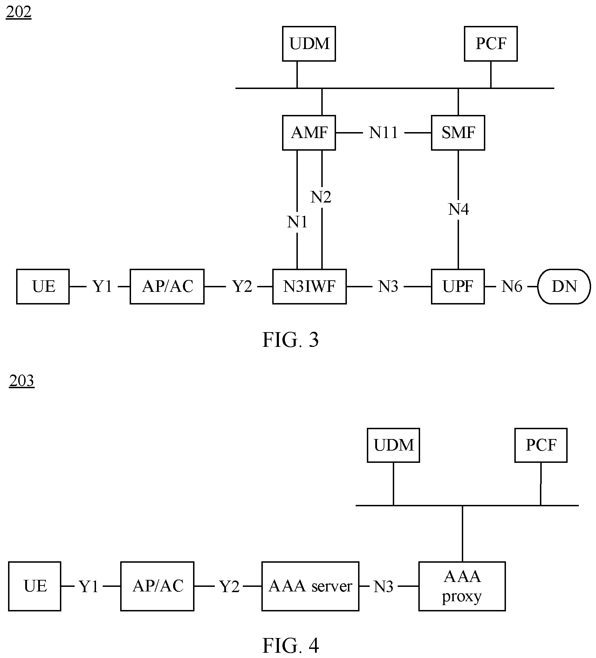

FIG. 3 is a schematic diagram of another network architecture accessed over an N3GPP access technology according to an embodiment of this application.

It should be understood that a difference between the network architecture 202 shown in FIG. 3 and the network architecture 201 shown in FIG. 2 lies in that a terminal device in the network architecture 202 cannot be directly connected to a 5GC, in other words, the terminal device cannot communicate with an AMF through an N1 interface. The terminal device needs an N3IWF network element agent to support the N1 interface. To be specific, the terminal device does not support a NAS message, and data transmitted between the terminal device and the AMF needs to be forwarded by using an AP/AC and/or the N3IWF network element. Functions and communication interfaces of UDM, a PCF, an SMF, a UPF, and a DN in the network architecture 202 are the same as those described in FIG. 1. Details are not described herein again.

FIG. 4 is a schematic diagram of still another network architecture accessed over an N3GPP access technology according to an embodiment of this application.

The network architecture 203 shown in FIG. 4 corresponds to a scenario in which a terminal device accesses UDM of a 5GC by using an authentication, authorization, and accounting (authentication, authorization, and accounting, AAA) server and an AAA proxy. The network architecture 203 includes the terminal device, an AP/AC, the authentication and AAA server, the AAA proxy, UDM, and a PCF. The terminal device, the AP/AC, the UDM, and the PCF are described above. Details are not described herein again. The AAA server is a server program that can process a user access request, provides authentication, authorization, and accounting services, and mainly aims to manage user access to a network server and provide a service for a user having access permission. The AAA server usually works with network access control, a gateway server, a database, a user information directory, and the like. A network connection server interface that works with the AAA server is a remote authentication dial-in user service (remote authentication dial-in user service, RADIUS). The AAA proxy (AAA proxy) is a proxy device for the terminal device to interact with the AAA server.

Certainly, the 5G core network further supports fixed network access. A specific network architecture is similar to those of the N3GPP access network architectures shown in FIG. 2 and FIG. 3, in other words, the N3IWF network element in the foregoing network architecture is replaced with a fixed network access gateway. A fixed access network (fixed access network, FAN) device, for example, a switch or a router, is further included between the terminal device and the fixed network access gateway.

It should be understood that FIG. 2, FIG. 3, and FIG. 4 are merely examples. For example, in a 6G communication system, the foregoing network element or device may still use a name of the network element or device in the 5G communication system, or may have another name. This is not limited in this embodiment of this application. The function of the foregoing network element or device may be implemented by an independent network element, or may be jointly implemented by several network elements. The communication method provided in embodiments of this application may further relate to a network element that is not shown in FIG. 2. Certainly, the communication method provided in embodiments of this application may alternatively include only some network elements shown in FIG. 2.

In the conventional technology, when accessing a 5G core (5G core, 5GC) network by using an N3GPP network, a terminal device needs to access the 5GC by using an N3IWF network element. In this process, an Internet protocol security (Internet protocol security, IPsec) connection channel is established between the terminal device and the N3IWF network element, and a related parameter of 5GC QoS control is sent to the N3IWF network element through an N2 interface. The N3IWF gateway performs QoS control on uplink and downlink service flows based on the received QoS parameter. In this process, the QoS parameter of the 5GC for an N3GPP access technology is sent only to the N3IWF network element, in other words, QoS control of the 5GC for the N3GPP access technology can only be applied to the N3IWF network element. However, QoS control is performed on an air interface, for example, a WLAN air interface, of an N3GPP access side by using another QoS parameter prestored in an AP/AC. The QoS parameter in the AP/AC may be inconsistent with the QoS parameter sent by the 5GC to the N3IWF network element through the N2 interface. In this case, a QoS control policy of the 5GC conflicts with a QoS control policy of the air interface of the N3GPP access side, resulting in poor user experience.

This application provides a communication method to unify QoS control policies between a 5GC and an N3GPP access device, thereby avoiding poor user experience caused by a conflict of the QoS control policies.

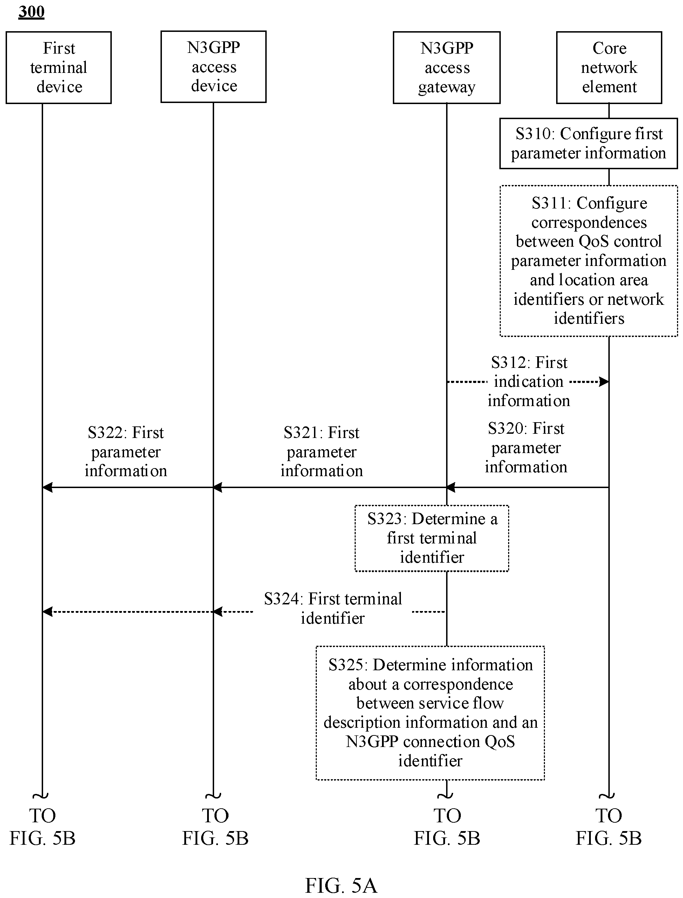

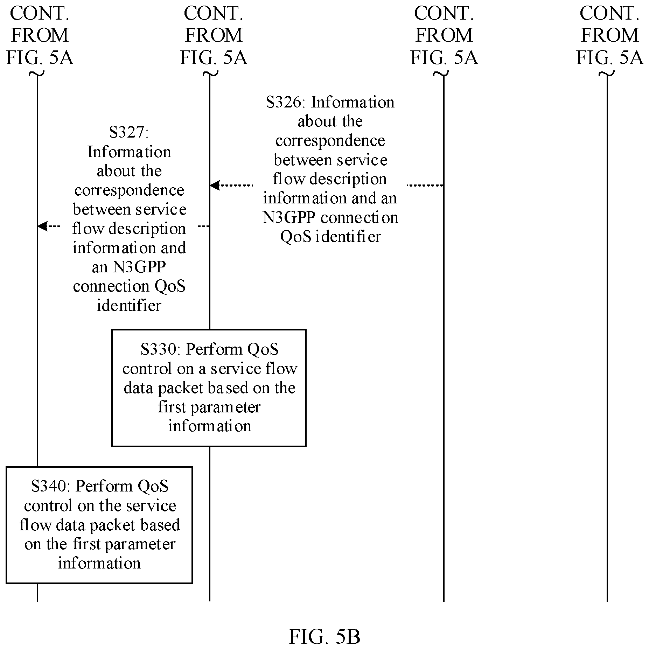

FIG. 5A and FIG. 5B are a schematic flowchart of a communication method according to an embodiment of this application. The method 300 shown in FIG. 5A and FIG. 5B includes the following steps.

Step S310: A core network element configures first parameter information, where the first parameter information is QoS control parameter information of an N3GPP access technology, and the first parameter information is used to perform QoS control on a service flow data packet transmitted by a first terminal device by using the N3GPP access technology.

Optionally, the core network element is UDM or a UDR. The N3GPP access technology includes a WLAN access technology, a SparkLink short-range access technology, a Bluetooth access technology, a radio frequency identification (radio frequency identification, RFID) access technology, and the like.

It should be understood that the first parameter information may be used to perform QoS control on the service flow data packet transmitted when the first terminal device accesses a core network by using the N3GPP access technology, or may be used to perform QoS control on the service flow data packet transmitted when the first terminal device accesses another network by using the N3GPP access technology. For example, the first parameter information is used to perform QoS control on the service flow data packet transmitted when the first terminal device is routed to the Internet by using the N3GPP access technology. This is not limited in this application.

Optionally, the first parameter information includes at least one of a connection QoS parameter of the N3GPP access technology, bandwidth at a terminal device granularity, and a terminal device priority. The connection QoS parameter of the N3GPP access technology includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

It should be understood that the N3GPP connection QoS identifier may define a QoS class, and a node in the network may determine the QoS class by using the N3GPP connection QoS identifier, to determine the QoS parameter.

For example, the N3GPP connection QoS identifier may be a distributed channel access (enhanced distributed channel access, EDCA) value, a WLAN-side user priority (user priority, UP) value, a differentiated services code point (differentiated services code point, DSCP) value, or a peercast protocol (peercast protocol, PCP). Different EDCA values, WLAN UP values, DSCP values, or PCP values correspond to different QoS classes. Certainly, the foregoing QoS parameter is merely an example. The N3GPP connection QoS identifier in this application may alternatively correspond to another QoS parameter. This is not limited herein. Table 1 lists EDCA parameters and parameter meanings.

**Table 1**

| Parameter name | Parameter meaning |
|---|---|
| Arbitration inter-frame spacing number (arbitration inter-frame spacing number, AIFSN) | In a data communication facility (data communication facility, DCF) mechanism, a distributed inter-frame spacing (distributed inter-frame spacing, DIFS) is a fixed value. Wi-Fi multimedia (Wi-Fi multi-media, WMM) may be configured with different idle waiting time for different ACs. A larger AIFSN value indicates longer idle waiting time for a user and a lower priority |
| Exponent form of a minimum contention window (exponent form of CWmin, ECWmin) and exponent form of a maximum contention window (exponent form of CWmax, ECWmax) | Average backoff time is determined by both the ECWmin and the ECWmax. Larger values of the ECWmin and the ECWmax indicate longer average backoff time and a lower priority |
| Transmission opportunity limit (transmission opportunity limit, TXOPLimit) | After channel contention succeeds, UE can occupy a channel within a period of the TXOPLimit. A larger TXOPLimit value indicates longer time for which the UE can occupy the channel at one time. If the TXOPLimit is set to 0, the UE can send only one packet each time the UE occupies a channel |

It should be understood that some EDCA parameters are shown in Table 1, but not all of the EDCA parameters. The EDCA parameters may further include another parameter that is not listed in Table 1. This is not limited in this application.

It should be further understood that when the channel access parameter of the N3GPP access technology includes both the N3GPP connection QoS identifier and the channel QoS parameter, it indicates that the channel access parameter of the N3GPP access technology includes a correspondence between an N3GPP connection QoS identifier and a channel QoS parameter.

For example, the channel QoS parameter includes one or more of the following: for example, a delay, a packet loss rate, guaranteed bandwidth, maximum bandwidth, a peak rate, and a jitter.

Step S320: The core network element sends the first parameter information to an N3GPP access gateway. Correspondingly, the N3GPP access gateway receives the first parameter information.

The N3GPP access gateway may be an N3IWF. If an N3GPP network is a campus network WLAN, the N3GPP access gateway may be a campus gateway.

Optionally, before step S320, the method 300 further includes step S312: The N3GPP access gateway sends first indication information to the core network element, where the first indication information indicates that the first terminal device accesses the core network element by using the N3GPP access technology. Correspondingly, the core network element receives the first indication information.

It should be understood that when the core network element is the UDM, there may be another core network element (for example, an AMF) between the N3GPP access gateway and the UDM to forward the first indication information.

After receiving the first indication information, the core network element may determine the first parameter information based on the first indication information, and send the first parameter information to the N3GPP access gateway.

Optionally, the first indication information includes any one or more of the following: indication information of the N3GPP access technology, a location area identifier, or a network identifier.

In a possible implementation, the first indication information is a field that may identify that the first terminal device accesses the network by using the N3GPP access technology, and the core network element may determine, by using the field, that the first terminal device accesses the network by using the N3GPP access technology.

In another possible implementation, the first indication information is the location area identifier, and the core network element may determine, by using the location area identifier, that the first terminal device accesses the network by using the N3GPP access technology.

In another possible implementation, the first indication information is the network identifier, and the core network element may determine, by using the network identifier, that the first terminal device accesses the network by using the N3GPP access technology.

Optionally, the method 300H further includes step S311: The core network element configures correspondences between a plurality of location area identifiers and a plurality of groups of QoS control parameter information of an N3GPP access technology, and/or correspondences between a plurality of network identifiers and a plurality of groups of QoS control parameter information.

When the core network element locally stores the correspondences between a plurality of location area identifiers and a plurality of groups of QoS control parameter information of an N3GPP access technology, and/or the correspondences between a plurality of network identifiers and a plurality of groups of QoS control parameter information, after receiving the first indication information, the core network element may determine, according to the correspondence, QoS control parameter information that is of the N3GPP access technology and that corresponds to a first identifier, and send the QoS control parameter information to the N3GPP access gateway.

For example, when the core network element is configured with a group of QoS control parameter information used for the N3GPP access technology, the core network element may determine the first parameter information by using the first indication information. When the core network element is configured with a plurality of groups of QoS control parameter information of the N3GPP access technology, the core network element needs to obtain mapping relationship information. The mapping relationship information indicates correspondences between a plurality of groups of QoS control parameter information and a plurality of identifiers. The core network element determines, as the first parameter information based on the mapping relationship information, the one group of QoS control parameter information corresponding to the first identifier. The first identifier is a related identifier that is of the N3GPP access technology and that is used by the first terminal device.

Optionally, the first identifier includes at least one of the location area identifier and the network identifier.

It should be understood that, when the first identifier is the location area identifier, the location area identifier is an identifier of a location area of an N3GPP network accessed by the first terminal device by using the N3GPP access technology. When the first identifier is the network identifier, the network identifier is a network identifier of an N3GPP network accessed by the first terminal device by using the N3GPP access technology. For example, the N3 GPP network is a WLAN network, the location area identifier indicates a WLAN network in a specific location area, and the network identifier indicates a specific WLAN network (for example, the campus network).

Step S321: The N3GPP access gateway sends the first parameter information to an N3GPP access device. Correspondingly, the N3GPP access device receives the first parameter information.

Step S322: The N3GPP access device sends the first parameter information to the first terminal device. Correspondingly, the first terminal device receives the first parameter information.

It should be understood that the foregoing steps S320, S321, and S322 about transmitting the first parameter information are merely examples. This is not limited in this application. The first parameter information received by the first terminal device may be directly from the core network element (AMF), or may be sequentially forwarded by the N3GPP access gateway and the N3GPP access device.

Optionally, the method 300 further includes step S323: The N3GPP access gateway determines a first terminal identifier, where the first terminal identifier is an identifier of the first terminal device in an N3GPP access network.

In other words, when the first terminal device accesses the network by using the N3GPP network, the N3GPP access gateway may configure, for the first terminal device, the identifier, that is, the first terminal identifier, of the first terminal device in the N3GPP access network.

Optionally, the method 300 further includes step S324: The N3GPP access gateway sends the first terminal identifier to the N3GPP access device and the first terminal device. Correspondingly, the N3GPP access device and the first terminal device receive the first terminal identifier.

Optionally, the method 300 further includes step S325: The N3GPP access gateway determines information about a correspondence between service flow description information and an N3GPP connection QoS identifier.

For example, the N3GPP access gateway may obtain a correspondence between service flow description information and a 5QI. For example, an SMF sends the correspondence between service flow description information and a 5QI to the N3GPP access gateway by using the AMF. The N3GPP access gateway may obtain a correspondence between a 5QI and a channel access parameter of an N3GPP access technology in step S320. Then, the N3GPP access gateway may determine the correspondence between service flow description information and an N3GPP connection QoS identifier according to the correspondence between service flow description information and a 5QI and the correspondence between a 5QI and a channel access parameter of an N3GPP access technology.

Optionally, the service flow description information includes at least one of a standard delay format (standard delay format, SDF), an IP 5-tuple (at least one of source and destination IP addresses, a port number, and a protocol stack), source and destination MAC addresses, and a QoS flow identifier (QoS flow ID, QFI).

Optionally, the method 300 further includes step S326: The N3GPP access gateway sends the information about the correspondence between service flow description information and an N3GPP connection QoS identifier to the N3GPP access device. Correspondingly, the N3GPP access device receives the information about the correspondence between service flow description information and an N3GPP connection QoS identifier.

Optionally, the method 300 further includes step S327: The N3GPP access gateway sends the information about the correspondence between service flow description information and an N3GPP connection QoS identifier to the first terminal device. Correspondingly, the first terminal device receives the information about the correspondence between service flow description information and an N3GPP connection QoS identifier.

Step S330: The N3GPP access device performs, based on the first parameter information, QoS control on the service flow data packet transmitted by the first terminal device by using the N3GPP access technology.

Optionally, the N3GPP access network device determines a channel QoS parameter of the service flow data packet according to the correspondence between service flow description information and an N3GPP connection QoS identifier, and the correspondence between an N3GPP connection QoS identifier and a channel QoS parameter. The service flow data packet may be determined based on the first terminal identifier.

The N3GPP access network device performs QoS control on the service flow data packet based on the determined channel QoS parameter.

For example, for an uplink service flow data packet, after the uplink service flow data packet is sent to the N3GPP access network device, the N3GPP access network device identifies the first terminal device based on the first terminal identifier of the uplink service flow data packet; determines, based on the channel access parameter of the N3GPP access technology, an occupation status of an air interface channel that is of the N3GPP network and that is occupied by the uplink service flow data packet of the terminal device; performs uplink bandwidth control on all uplink service flow data packets of the terminal device based on the bandwidth at a terminal device granularity; and performs priority scheduling on the uplink data packet based on a terminal device priority, that is, performs QoS control on the uplink service flow data packet.

For a downlink service flow data packet, after the N3GPP access network device receives the downlink service flow data packet, the N3GPP access network device identifies the first terminal device based on the first terminal identifier of the downlink service flow data packet; and determines, based on a user priority carried at a MAC layer of the data packet, a channel access parameter that is of the N3GPP access technology and that corresponds to the downlink service flow data packet. The N3GPP access network device determines, based on the channel access parameter of the N3GPP access technology, usage of the downlink data packet on an air interface channel of the N3GPP network to perform QoS control on the downlink service flow data packet.

Step S340: The first terminal device performs, based on the first parameter information, QoS control on the service flow data packet transmitted by the first terminal device by using the N3GPP access technology.

Optionally, when the channel access parameter of the N3GPP access technology includes the correspondence between an N3GPP connection QoS identifier and a channel QoS parameter, the first terminal device determines the channel QoS parameter based on the N3GPP connection QoS identifier, and performs, based on the channel QoS parameter, QoS control on the service flow data packet transmitted by the first terminal device by using the N3GPP access technology.

Optionally, the first terminal device determines, based on the service flow description information, a QFI corresponding to the service flow data packet; and determines, based on the QFI and the information about the correspondence between a QoS identifier (QFI) of N3GPP connection and service flow description information, an N3GPP connection QoS identifier corresponding to the service flow data packet.

For example, the first terminal device determines a 5QI corresponding to the uplink service flow data packet (for example, the UE determines, according to a QoS rule, a QFI corresponding to the uplink service data packet, and determines the 5QI of the uplink service data packet according to a correspondence between a QFI and a 5QI); determines, based on the information about the correspondence between a QFI and service flow description information, an N3GPP connection QoS identifier corresponding to the uplink flow data packet; determines a channel QoS parameter according to the correspondence between an N3GPP connection QoS identifier and a channel QoS parameter; and controls, based on the channel QoS parameter, use of the uplink service flow data packet on the air interface channel of the N3 GPP network. In addition, when a MAC data packet header is encapsulated, a priority value of a terminal device corresponding to the uplink service flow data packet may be carried.

The foregoing describes step procedures of the communication method to unify QoS control policies between a 5GC and the N3GPP access device, thereby avoiding poor user experience caused by a conflict of the QoS control policies. The following begins to describe specific examples in which the communication method 300 in the foregoing embodiment is specifically applied to different network architectures in which a terminal device accesses a network by using an N3GPP access technology. An example in which an N3GPP access network in the following is a WLAN network and the network accessed by the terminal device by using the N3GPP access technology is a core network is used.

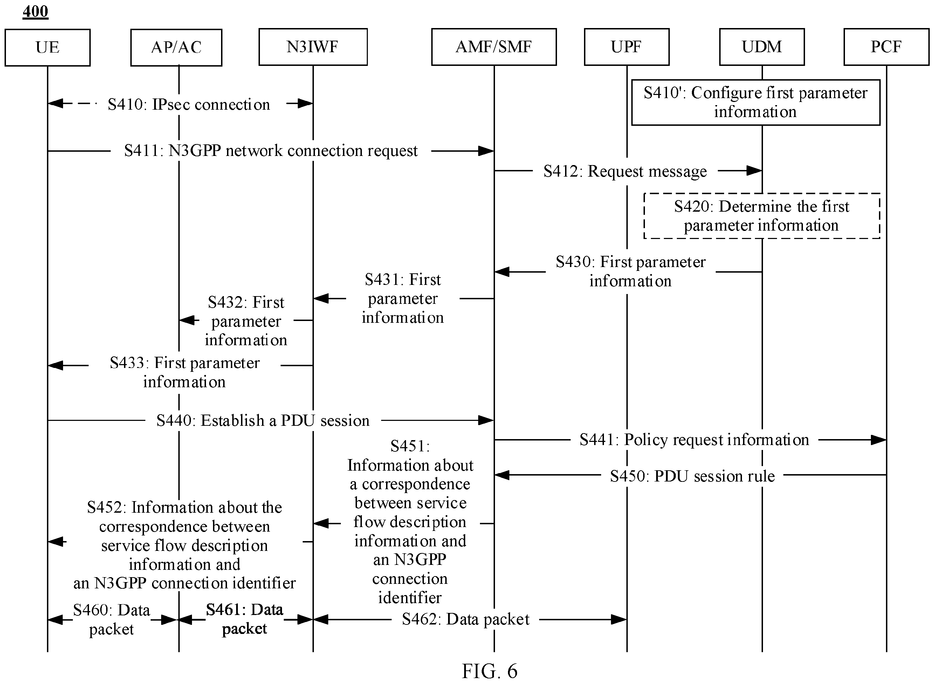

FIG. 6 is a flowchart of a communication method applied to an N3GPP network architecture according to an embodiment of this application.

The communication method 400 shown in FIG. 6 is applicable to the network architecture 201 shown in FIG. 2. The UE may be directly connected to the 5GC, in other words, the UE may communicate with the AMF through the N1 interface. In other words, the UE communicates with the AMF by using a NAS message. The method 400 includes the following steps.

Step S410: The UE initiates an Internet protocol security (Internet protocol security, IPsec) connection establishment procedure to the N3GPP access gateway N3IWF. For example, the UE obtains a UE local IP (UE local IP) address from a WLAN network, and establishes the IPsec connection to the N3IWF by using the UE local IP address.

Step S411: The UE initiates a network connection request to the AMF by using the WLAN network. For example, the UE sends the NAS message to the AMF. The NAS message may be a registration request message, a service request message, or the like. Correspondingly, after receiving the NAS message, the AMF obtains access location information of the UE from the N3IWF, or may further obtain network identifier information. The network identifier information may be a non-public network (non-public network, NPN) identifier or a campus network identifier.

Step S412: The AMF sends a request message to the UDM, and correspondingly, the UDM receives the request message. The request message includes first indication information. The first indication information includes at least one of an N3GPP access technology indication, a location area identifier, or a network identifier, and the N3GPP access technology indication indicates the UE to access the AMF by using the WLAN network.

Optionally, the method 400 includes step S420: The UDM determines first parameter information. For example, the UDM determines, based on the at least one of an N3GPP access technology indication, a location area identifier, or network identifier information, QoS control parameter information, that is, the first parameter information, of a related N3GPP access technology. The first parameter information includes at least one of a WLAN connection QoS parameter, a bandwidth at a UE granularity, and a UE priority.

Before step S420, the method 400 further includes the following steps.

Step S410': The UDR or the UDM configures the first parameter information, for example, the at least one of a WLAN connection QoS parameter, bandwidth at a UE granularity, and a UE priority, where the WLAN connection QoS parameter includes at least one of the following:
(1) a WLAN air interface QoS parameter, where the WLAN air interface QoS parameter may also be referred to as a WLAN channel access parameter, and the WLAN channel access parameter is an access parameter used to determine a WLAN air interface channel, that is, used to determine how the UE performs resource preemption on the WLAN air interface channel to implement QoS control on the WLAN air interface, where the WLAN channel access parameter includes at least one of a WLAN connection QoS identifier and a channel QoS parameter; and
(2) a correspondence between a 5G quality of service identifier (5G QoS identifier, 5QI) and a WLAN channel access parameter.

The QoS identifier of the WLAN connection may include an EDCA value, a WLAN UP value, a DSCP value, or a PCP value. The channel QoS parameter includes one or more of the following: for example, a delay, a packet loss rate, guaranteed bandwidth, maximum bandwidth, a peak rate, and a jitter.

For example, different EDCA values, WLAN UP values, DSCP values, or PCP values indicate different QoS classes. The QoS classes may be WLAN service queues, and the WLAN service queues are classified based on service types. For example, a WLAN access device determines the WLAN channel access parameter based on the service type. Generally, user services are classified into four types based on priorities in descending order: a voice (voice) service, a video (video) service, a best effort (best effort) service, and a background (background) service. The foregoing four types are also referred to as the WLAN service queues. Data packets of each type of service belong to a same service queue. Each service queue defines a set of enhanced EDCA parameters. EDCA parameters of a service queue determine a channel occupation capability of the service queue. In other words, a channel occupation opportunity of a high-priority service queue is greater than that of a low-priority service queue. The correspondence between a 5QI and a WLAN channel access parameter and/or a correspondence between a 5QI and a WLAN service queue are/is used to coordinate a correspondence between a WLAN air interface QoS parameter and a 5GC QoS parameter to implement unified QoS control from a core network end to an access network end.

It should be understood that the bandwidth at a UE granularity configured in the UDR or the UDM is a sum of bandwidth of all services of the UE, including the guaranteed bandwidth and/or the maximum bandwidth value. The UE priority configured in the UDR or the UDM indicates a UE level. For example, the UE level is gold, silver, bronze, or the like.

Optionally, correspondences between a plurality of groups of QoS control parameter information (for example, WLAN connection QoS parameters, bandwidth at a UE granularity, or UE priorities) and a plurality of location areas or a plurality of network identifiers are further configured in the UDR or the UDM. The correspondence indicates that the QoS control parameter information is applicable to a WLAN in a specific location area or a specific network (for example, a campus network).

For example, when the UDR or the UDM is configured with a group of QoS control parameter information used for the N3GPP access technology, the UDR or the UDM may determine the first parameter information by using the first indication information. When the UDR or the UDM is configured with the plurality of groups of QoS control parameter information of the N3GPP access technology, the UDR or the UDM needs to obtain mapping relationship information. The mapping relationship information indicates correspondences between a plurality of groups of QoS control parameter information and a plurality of identifiers. The UDR or the UDM determines, as the first parameter information based on the mapping relationship information, one group of QoS control parameter information corresponding to a first identifier. The first identifier is a related identifier that is of the N3GPP access technology and that is used by the first terminal device.

Optionally, the first identifier includes at least one of a location area identifier and a network identifier that are of the WLAN.

It should be understood that when the QoS control parameter information (for example, the WLAN connection QoS parameter, the bandwidth at a UE granularity, or the UE priority) is configured in the UDM, after receiving the request message in step S412, the UDM locally searches for a related WLAN connection parameter, bandwidth at a UE granularity, or UE priority based on information included in the request message. When the QoS control parameter information is configured in the UDR, after receiving the request message in step S412, the UDM needs to obtain, from the UDR, a WLAN connection QoS parameter, bandwidth at a UE granularity, or UE priority related to information included in the request message. Alternatively, before receiving the request message in step S412, the UDM obtains a related WLAN connection QoS parameter, bandwidth at a UE granularity, or UE priority. This is not limited in this application.

Step S430: The UDM sends the first parameter information to the AMF, and correspondingly, the AMF receives the first parameter information. For example, a subscription data obtaining message sent by the UDM to the AMF includes the at least one of a WLAN connection QoS parameter, bandwidth at a UE granularity, or a UE priority. Correspondingly, the AMF receives the subscription data obtaining message.

Step S431: The AMF sends the first parameter information to the N3IWF, and correspondingly, the N3IWF receives the first parameter information. The first parameter information includes the at least one of a WLAN connection QoS parameter, bandwidth at a UE granularity, or a UE priority.

For example, the AMF sends an N2 interface message to the N3IWF. Correspondingly, the N3IWF receives the N2 interface message. The N2 interface message includes the at least one of a WLAN connection QoS parameter, UE bandwidth, or a UE priority. Alternatively, a NAS message (corresponding to the NAS message in step S411) replied by the AMF to the UE may be sent to the N3IWF by using the foregoing N2 message or another N2 message. The NAS message replied to the UE may be a registration success message, a service request success message, or the like, and the NAS message includes the WLAN connection QoS parameter and/or the bandwidth at a UE granularity.

Step S432: The N3IWF sends the first parameter information to an AP/AC, and correspondingly, the AP/AC receives the QoS control parameter information.

Optionally, the N3IWF further sends a first terminal identifier (UE local IP) to the AP/AC and/or a terminal device, and the AP/AC receives the UE local IP.

For example, the N3IWF determines the first terminal identifier, that is, the UE local IP, and sends, to the WLAN AP/AC and/or the terminal device, the UE local IP and at least one of the following WLAN connection QoS parameter, UE bandwidth, or UE priority corresponding to the UE.

Step S433: The N3IWF forwards the first parameter information in step S431 to the UE, and correspondingly, the UE receives the first parameter information. For example, the N3IWF forwards the NAS message in step S431 to the UE. The NAS message includes the WLAN connection QoS parameter and/or the bandwidth at a UE granularity. Correspondingly, after receiving the NAS message, the UE stores the WLAN connection QoS parameter and/or the bandwidth at a UE granularity.

It should be understood that a sequence of step S432 and step S433 is not limited in this application. Step S432 may be before or after step S433.

Step S440: The UE initiates a PDU session establishment request to the SMF. For example, the UE sends a PDU session establishment request message to the SMF.

Step S441: After receiving the PDU session establishment request, the SMF sends policy request information to the PCF, and correspondingly, the PCF receives the policy request information.

Step S450: After receiving the policy request information, the PCF delivers a PDU session rule to the SMF, for example, a policy control and charging (policy control and charging, PCC) rule related to a PDU session, where the rule includes a 5GC QoS rule. Correspondingly, the SMF receives the PDU session rule.

Optionally, the PCF further sends information about a correspondence between service flow description information and a WLAN UP (a type of WLAN connection QoS identifier). The service flow description information includes at least one of an SDF, an IP 5-tuple, source and destination MAC addresses, and a QFI. The WLAN UP is a QoS control parameter in a MAC header encapsulated in a service data packet transmitted through the WLAN air interface.

Step S451: The SMF sends information about a correspondence between service flow description information and a WLAN connection QoS identifier (VLAN priority) to the N3IWF according to the received PDU session rule, and correspondingly, the N3IWF receives the information about the correspondence.

For example, the SMF aggregates, according to the PCC rule sent by the PCF, service flows that have a same QoS requirement into a same QoS flow (QoS flow), and identifies the QoS flow by using a QoS flow ID (QFI). In addition, the SMF notifies the UPF to allocate a user plane resource to the PDU session. In addition, the SMF generates N2 information and a PDU session establishment success message. The N2 information is sent to the N3IWF by using the AMF, and the N2 information includes a correspondence between a QFI and a VLAN priority. It should be understood that the VLAN priority is generated based on the WLAN UP, and the VLAN priority may be equal to the WLAN UP value, or values of the VLAN priority and the VLAN priority are different but are in a one-to-one correspondence. For example, a WLAN UP corresponding to a service flow is equal to 5, and the SMF determines, based on the WLAN UP = 5, that the VLAN priority is equal to 5. If a QFI to which the service flow belongs is equal to 1, the N2 message includes a correspondence between the QFI = 1 and the VLAN priority = 5. The N3IWF processes the service data packet based on the VLAN priority. In addition, the NAS message (N2 message) further includes a QoS rule that is used to determine a QFI corresponding to a service flow.

The PDU session establishment success message is forwarded to the N3IWF by using the AMF, and the PDU session establishment success message includes a correspondence between a WLAN UP and a QFI or service flow description information.

It should be understood that the PDU session establishment success message is finally sent to the UE. Therefore, the PDU session establishment success message includes a correspondence between the QFI = 1 and the WLAN UP = 5. Because the foregoing correspondence is used by the UE on the WLAN air interface, the correspondence is the WLAN UP value instead of the VLAN priority, and the UE uses the WLAN UP to process the service data packet.

It should be understood that the N3IWF may determine a correspondence between service flow description information and a WLAN connection QoS identifier.

In a possible implementation, the N3IWF receives, from the SMF, the correspondence between service flow description information and a WLAN connection QoS identifier.

In another possible implementation, the N3IWF may obtain a correspondence between service flow description information and a 5QI. For example, the SMF sends the correspondence between service flow description information and a 5QI to the N3IWF by using the AMF, and obtains a correspondence between a 5QI and a channel access parameter of a WLAN access technology (S431). Then, the N3IWF may determine the correspondence between service flow description information and a WLAN connection QoS identifier according to the correspondence between service flow description information and a 5QI and the correspondence between a 5QI and a channel access parameter of a WLAN access technology.

Step S452: The N3IWF sends information about the correspondence between service flow description information (QFI) and a WLAN connection QoS identifier (WLAN UP) to the UE, and correspondingly, the UE receives the information about the correspondence.

For example, the UE receives the PDU session establishment success message from the SMF, and the PDU session establishment success message includes the QoS rule and information about a correspondence between a WLAN UP and service flow description information or a QFI.

Step S460: Perform a service flow data packet transmission process between the UE and the AP/AC.

The UE performs WLAN QoS control on an uplink/downlink service flow data packet based on the QoS control parameter information received in step S433 and/or according to the correspondence between a QFI and a WLAN UP received in step S452.

For example, the UE determines a 5QI corresponding to the uplink service flow data packet (for example, the UE determines, according to the QoS rule, a QFI corresponding to the uplink service data packet, and determines the 5QI of the uplink service flow data packet according to a correspondence between a QFI and a 5QI), determines a WLAN channel access parameter of the uplink service flow data packet based on the WLAN connection QoS parameter, and uses a WLAN air interface resource by the WLAN channel access parameter controlling the uplink service flow data packet. In addition, when a WLAN-side MAC data packet header is encapsulated, a WLAN UP value corresponding to the uplink service flow data packet may be carried.

Step S461: Perform a service flow data packet transmission process between the AP/AC and the N3IWF.

For example, the WLAN AP/AC transmits a data packet based on the first parameter information received in step S432. For example, for the uplink service flow data packet, after the uplink service flow data packet is sent to the WLAN AP/AC through the WLAN air interface, the WLAN AP/AC identifies the UE based on a source IP address (UE local IP) of the uplink service flow data packet; determines, based on a WLAN channel access parameter, an occupation status of the WLAN air interface channel occupied by the service flow uplink data packet of the UE; performs uplink bandwidth control on all uplink service flow data packets of the UE based on the bandwidth at a UE granularity; and performs priority scheduling on the uplink data packets based on WLAN UP values carried in MAC headers of the uplink data packets or the UE priority, that is, implements QoS control on the WLAN-side uplink data packet.

For a downlink service flow data packet, after the WLAN AP/AC receives the downlink service flow data packet, the WLAN AP/AC identifies the UE based on a destination IP address (UE local IP) of the data packet, and sets a WLAN UP value based on a VLAN priority carried at a MAC layer of the downlink data packet and/or the UE priority received from step S432. The WLAN AP/AC determines, based on the VLAN priority or the WLAN UP, a WLAN service queue to which the downlink data packet belongs. Each WLAN service queue corresponds to a different WLAN channel access parameter. In other words, the WLAN AP/AC determines, based on the WLAN channel access parameter, usage of the downlink data packet on the WLAN air interface channel to implement QoS control on the WLAN-side downlink data packet.

Step S462: Perform a service flow data packet transmission process between the N3IWF and the core network element UPF.

For example, the N3IWF performs QoS control on a data packet based on the first parameter information received in step S431 and/or according to the correspondence between service flow description information and a VLAN priority received in step S451.

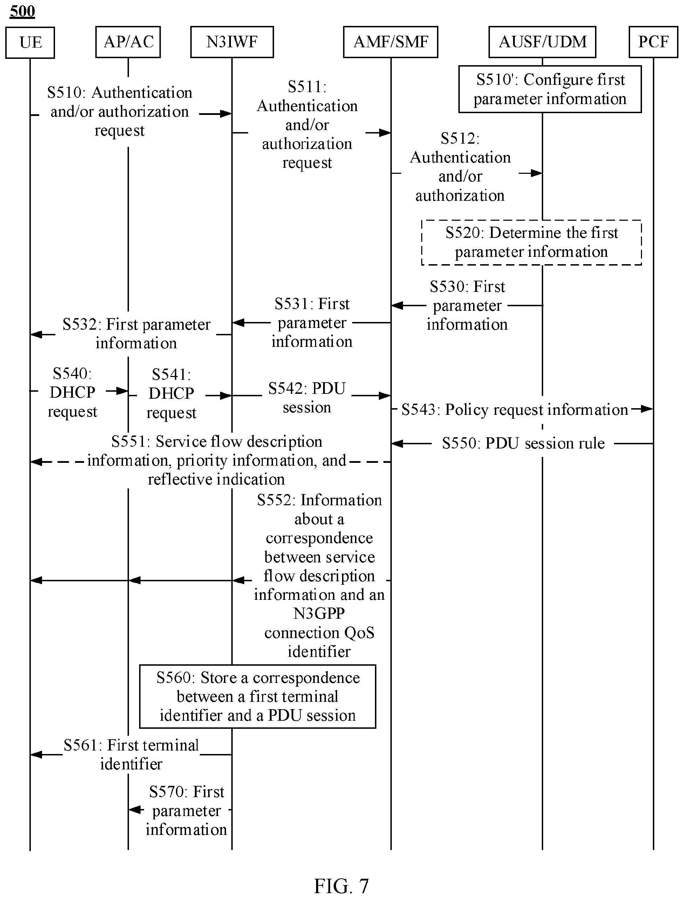

FIG. 7 is a flowchart of a communication method applied to another N3GPP network architecture according to an embodiment of this application.

The communication method 500 shown in FIG. 7 is applicable to the network architecture 202 shown in FIG. 3. A terminal device cannot be directly connected to a 5GC, in other words, the terminal device cannot communicate with the AMF through the N1 interface. The N1 interface needs to be supported by the N3IWF network element agent. In other words, the terminal device does not support a NAS message. The method 500 includes the following steps.

Step S510: The UE initiates an authentication and/or authorization procedure to the N3IWF. For example, the UE sends an authentication and/or authorization request message (EAP authentication request message) to the N3IWF.

Step S511: The N3IWF sends an authentication and/or authorization request message to the AMF, and correspondingly, the AMF receives the authentication and/or authorization request message, where the authentication and/or authorization request message includes an authentication and/or authorization parameter.

For example, the N3IWF generates a NAS message on behalf of the UE. The NAS message may be a registration request message, and the NAS message carries an authentication and/or authorization parameter sent by the UE. For example, the NAS message carries the EAP authentication request message.

Step S512: The AMF sends authentication and/or authorization information information to the UDM, and correspondingly, the UDM receives the authentication and/or authorization information information.

Optionally, the AMF further sends location information of the UE and/or WLAN network identifier information to the UDM.

It should be understood that one or more of the authentication and/or authorization information information, the location information, and the WLAN network identifier information is the foregoing first indication information.

Optionally, the method 500 includes step S520: The UDM determines first parameter information. For example, the UDM determines, based on the first indication information, at least one of a related WLAN connection parameter, bandwidth at a UE granularity, and UE priority, that is, the first parameter information. The first indication information includes at least one of an access technology indication (the access technology indication indicates that the UE accesses the AMF by using a WLAN network), a location area identifier (location information of the UE), or network identifier information.

Before step S520, the method 500 further includes the following steps.

Step S510': The UDR or the UDM configures the first parameter information, for example, the at least one of a WLAN connection QoS parameter, bandwidth at a UE granularity, and a UE priority, where the WLAN connection QoS parameter includes at least one of the following:
(1) a WLAN air interface QoS parameter, where the WLAN air interface QoS parameter may also be referred to as a WLAN channel access parameter, and the WLAN channel access parameter is an access parameter used to determine a WLAN air interface channel, that is, used to determine how the UE performs resource preemption on the WLAN air interface channel to implement QoS control on the WLAN air interface, where the WLAN channel access parameter includes at least one of a WLAN connection QoS identifier and a channel QoS parameter; and
(2) a correspondence between a 5G quality of service identifier (5G QoS identifier, 5QI) and a WLAN channel access parameter.

The QoS identifier of the WLAN connection may include an EDCA value, a WLAN UP value, a DSCP value, or a PCP value. The channel QoS parameter includes one or more of the following: for example, a delay, a packet loss rate, guaranteed bandwidth, maximum bandwidth, a peak rate, and a jitter.

Step S510' is the same as step S410' in the method 400, and specific content of a related parameter is the same as the description of step S410'. Details are not described herein again.

Optionally, correspondences between a plurality of groups of QoS control parameter information (for example, WLAN connection QoS parameters, bandwidth at a UE granularity, or UE priorities) and a plurality of location areas or a plurality of network identifiers are further configured in the UDR or the UDM. The correspondence indicates that the QoS control parameter information is applicable to a WLAN in a specific location area or a specific network (for example, a campus network).

For example, when the UDR or the UDM is configured with a group of QoS control parameter information used for an N3GPP access technology, the UDR or the UDM may determine the first parameter information by using the first indication information. When the UDR or the UDM is configured with the plurality of groups of QoS control parameter information of the N3GPP access technology, the UDR or the UDM needs to obtain mapping relationship information. The mapping relationship information indicates correspondences between a plurality of groups of QoS control parameter information and a plurality of identifiers. The UDR or the UDM determines, as the first parameter information based on the mapping relationship information, one group of QoS control parameter information corresponding to a first identifier. The first identifier is a related identifier that is of the N3GPP access technology and that is used by the first terminal device.

Optionally, the first identifier includes at least one of a location area identifier and a network identifier that are of the WLAN.

It should be understood that when the QoS control parameter information (for example, the WLAN connection QoS parameter, the bandwidth at a UE granularity, or the UE priority) is configured in the UDM, after receiving the request message in step S512, the UDM locally searches for a related WLAN connection QoS parameter, bandwidth at a UE granularity, or UE priority based on information included in the request message. When the QoS control parameter information is configured in the UDR, after receiving the request message in step S512, the UDM needs to obtain, from the UDR, a WLAN connection QoS parameter, bandwidth at a UE granularity, or UE priority related to information included in the request message. Alternatively, before receiving the request message in step S512, the UDM obtains a related WLAN connection QoS parameter, bandwidth at a UE granularity, or UE priority. This is not limited in this application.

Step S530: The UDM sends the first parameter information to the AMF, and correspondingly, the AMF receives the first parameter information. For example, a subscription data obtaining message sent by the UDM to the AMF includes the at least one of a WLAN connection parameter, bandwidth at a UE granularity, or a UE priority. Correspondingly, the AMF receives the subscription data obtaining message.

Optionally, the UDM encapsulates the WLAN connection QoS parameter and/or the bandwidth at a UE granularity into an EAP message, and sends the EAP message to the AMF. Alternatively, the UDM or the UDR sends the at least one of a WLAN connection QoS parameter, bandwidth at a UE granularity, or a UE priority to an AUSF. The AUSF encapsulates the information into an EAP message, and sends the EAP message to the AMF.

Step S531: The AMF sends the first parameter information to the N3IWF, and correspondingly, the N3IWF receives the first parameter information. The first parameter information includes the at least one of a WLAN connection QoS parameter, bandwidth at a UE granularity, or a UE priority.

For example, the AMF sends an N2 interface message to the N3IWF. Correspondingly, the N3IWF receives the N2 interface message. The N2 interface message includes the at least one of a WLAN connection QoS parameter, bandwidth at a UE granularity, or a UE priority. In addition, the AMF sends the EAP message to the N3IWF. The EAP message includes the WLAN connection QoS parameter and the bandwidth at a UE granularity.

Step S532: The N3IWF sends the first parameter information to the UE, and correspondingly, the UE receives the first parameter information.

Specifically, the N3IWF stores the at least one of a WLAN connection QoS parameter, bandwidth at a UE granularity, or a UE priority, and forwards the EAP message to the UE. The EAP message includes the WLAN connection QoS parameter and the bandwidth at a UE granularity.

Step S540: The UE sends a dynamic host configuration protocol (dynamic host configuration protocol, DHCP) request message to the WLAN AP/AC, and correspondingly, the WLAN AP/AC receives the DHCP request message.

Step S541: The WLAN AP/AC sends the DHCP request message to the N3IWF, or the WLAN AP/AC may send another message to the N3IWF as the DHCP request. This is not limited in this application.

Step S542: The N3IWF initiates a PDU session establishment request procedure.

For example, the N3IWF initiates the PDU session establishment request procedure based on the DHCP request message. To be specific, the N3IWF sends a PDU session establishment request message to the AMF, and the AMF forwards the PDU session establishment request message to the SMF.

Step S543: After receiving the PDU session establishment request, the SMF sends policy request information to the PCF, and correspondingly, the PCF receives the policy request information.

Step S550: After receiving the policy request information, the PCF delivers a PDU session rule to the SMF, for example, a policy control and charging (policy control and charging, PCC) rule related to a PDU session, where the rule includes a 5GC QoS rule. Correspondingly, the SMF receives the PDU session rule.

Optionally, the PCF further sends information about a correspondence between service flow description information and a WLAN connection QoS identifier (WLAN UP). The service flow description information is the same as the description in step S450. Details are not described herein again.

Optionally, the PDU session rule further includes WLAN UP reflective indication (reflective indication) information, and the indication information indicates to determine an uplink WLAN UP value based on a downlink WLAN UP.

For example, the WLAN UP reflective indication information may be at a PDU session granularity, or may be at a service flow granularity. When the WLAN UP reflective indication information is at the PDU session granularity, the indication information corresponds to a PDU session identifier, indicating that all service flows of the PDU session support to determine the uplink WLAN UP based on the downlink WLAN UP value. When the WLAN UP reflective indication information is at the service flow granularity, the indication information corresponds to the service flow description information, and indicates that a related service flow supports the operation of determining the uplink WLAN UP based on the downlink WLAN UP value.

Optionally, the method 500 includes the following steps.

Step S551: The SMF sends the service flow description information, the WLAN UP, and the WLAN UP reflective indication information to the UE, and correspondingly, the UE receives the service flow description information, the WLAN UP, and the WLAN UP reflective indication information.

For example, when the SMF determines that the NAS message cannot be transmitted to the UE by using an N3GPP access side (namely, the WLAN AP/AC), the SMF encapsulates the service flow description information, the WLAN UP, the reflective indication into the NAS message, sends the NAS message to the AMF, and sends a 3GPP access technology indication to the AMF. The 3GPP access technology indication indicates that the AMF sends the NAS message to the UE by using a 3GPP access side (for example, a RAN).

Optionally, the SMF may learn, based on a local configuration or the indication of the AMF, that the NAS message cannot be transmitted to the UE by using the N3GPP side, or determine that the UE is UE without a 5GC capability or UE without a 5GC capability on the N3GPP access side. In this case, the SMF transmits the foregoing information by using the NAS message in the 3GPP access technology. This application imposes no limitation on how the SMF determines that the NAS message cannot be transmitted to the UE by using the N3GPP access side.

Step S552: The SMF sends a correspondence between service flow description information and a WLAN connection QoS identifier (VLAN priority) to the N3IWF according to the received PDU session rule, and correspondingly, the N3IWF receives the correspondence.

For example, the SMF sends N2 information and a PDU session establishment success message to the N3IWF. The N2 information is sent to the N3IWF by using the AMF, and the N2 information includes a correspondence between a QFI and a VLAN priority, and a QoS parameter related to the PDU session, for example, bandwidth at a session granularity of a non-guaranteed bit rate (non-guaranteed bit rate, non-GBR) in a PDU, a guaranteed bandwidth value of a GBR, and the like. That the SMF determines the VLAN priority based on the WLAN UP is the same as the description in step S451. Details are not described herein again.

The PDU session establishment success message is used as a reply to step S542, and the PDU session establishment success message includes a correspondence between a WLAN UP and a QFI or service flow description information.

It should be understood that step S551 and step S552 are separately sent to different access network devices. The NAS message in step S551 is sent to the UE by using the 3GPP side access network device (RAN), and step S552 is sent to the N3GPP access gateway (N3IWF). Step S551 and step S552 are not subject to a specific sequence. In addition, if the UE does not support to transfer the NAS message in the 3GPP access technology, step S551 may be omitted.

It should be understood that the N3IWF may determine the correspondence between service flow description information and a WLAN connection QoS identifier. In addition to receiving, from the SMF, the correspondence between service flow description information and a WLAN connection QoS identifier, the N3IWF may obtain a correspondence between service flow description information and a 5QI. For example, the SMF sends the correspondence between service flow description information and a 5QI to the N3IWF by using the AMF, and obtains a correspondence between a 5QI and a channel access parameter of a WLAN access technology (S431). Then, the N3IWF may determine the correspondence between service flow description information and a WLAN connection QoS identifier according to the correspondence between service flow description information and a 5QI and the correspondence between a 5QI and a channel access parameter of a WLAN access technology.

After determining the correspondence between service flow description information and a WLAN connection QoS identifier, the N3IWF sends the correspondence to the AP/AC, and forwards the correspondence to the UE by using the AP/AC.

Step S560: The N3IWF establishes and/or stores a correspondence between a first terminal identifier (a UE IP address) and a PDU session.

For example, the N3IWF determines the UE IP address. The UE IP address may be allocated by the N3IWF to the UE, or the N3IWF obtains the UE IP address from a DHCP server. The N3IWF establishes and/or stores the correspondence between a UE IP address and a PDU session.

Step S561: The N3IWF sends the first terminal identifier (the UE IP address) to the UE, and correspondingly, the UE receives the first terminal identifier.

For example, the N3IWF sends a DHCP offer message or a DHCP response message (as a reply to step S541) to the UE. The DHCP offer message or the DHCP response message includes the UE IP address. Alternatively, the N3IWF sends the UE IP address to the WLAN AP/AC, and the WLAN AP/AC forwards the UE IP address to the UE.

Step S570: The N3IWF sends the first parameter information to the WLAN AP/AC, and correspondingly, the AP/AC receives the first parameter information.

Optionally, the N3IWF further sends the UE IP address to the WLAN AP/AC, and correspondingly, the AP/AC receives the UE IP address.

For example, the N3IWF determines the first terminal identifier, that is, the UE IP address, and sends, to the WLAN AP/AC, the UE IP address and at least one of the following WLAN connection QoS parameter, UE bandwidth, or UE priority corresponding to the UE.

Optionally, the N3IWF generates bandwidth at a PDU session granularity based on a QoS parameter related to the PDU session, for example, a sum of bandwidth of a non-GBR service flow and a GBR service flow, and then sends the bandwidth at a PDU session granularity to the WLAN AP/AC; or sends, to the WLAN AP/AC, flow description information and a guaranteed bandwidth value that are of the GBR service flow and/or description and a bandwidth value that are of the non-GBR service flow.

It should be understood that step S570 may be before step S540. This application imposes no limitation on a location of step S570 in the method 500.

It should be further understood that, in the method 500 used in transmission of a subsequent service flow data packet, specific QoS control performed by the UE, the WLAN AP/AC, and the N3IWF on the service flow data packet is the same as the description of the method 400. Details are not described herein again.

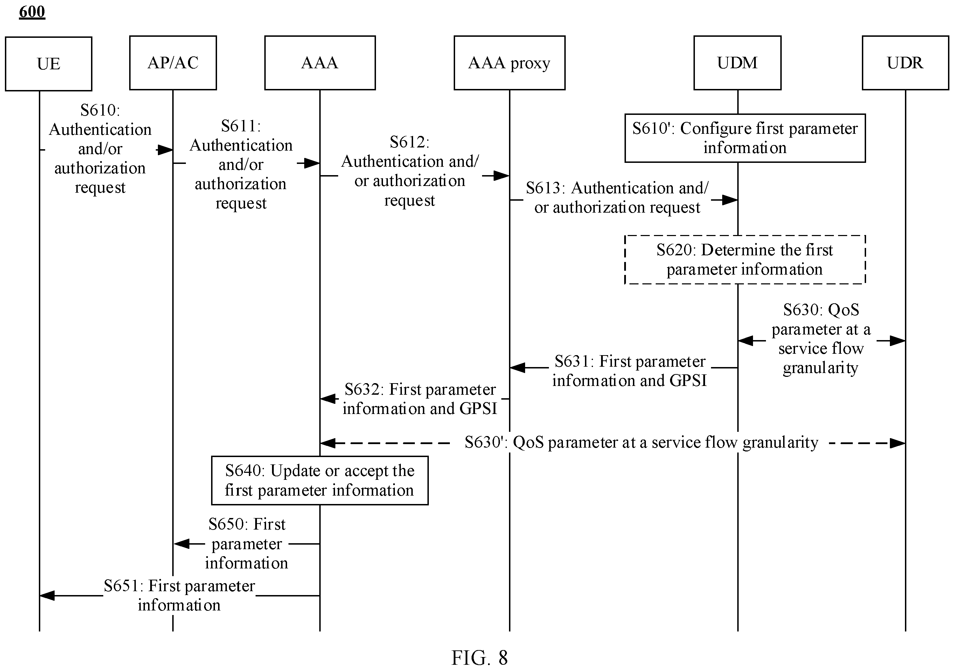

FIG. 8 is a flowchart of a communication method applied to still another N3GPP network architecture according to an embodiment of this application.

The communication method 600 shown in FIG. 8 is applicable to a scenario in which the terminal device accesses the UDM of the 5GC by using the AAA server and the AAA proxy in the network architecture 203 shown in FIG. 4. The method 600 includes the following steps.

Step S610: The UE initiates an authentication and/or authorization procedure to the WLAN AP/AC. For example, the UE sends an authentication and/or authorization request message to the WLAN AP/AC, and correspondingly, the WLAN AP/AC receives the authentication and/or authorization request message.

Step S611: The WLAN AP/AC sends the authentication and/or authorization request message to the AAA server; and correspondingly, the AAA server receives the authentication and/or authorization request message, and the AAA server is connected to the AAA proxy.

Step S612: The AAA server sends the authentication and/or authorization request message to the AAA proxy, and correspondingly, the AAA proxy receives the authentication and/or authorization request message.

Step S613: The AAA proxy sends the authentication and/or authorization request message (including first indication information) to the UDM, and correspondingly, the UDM receives the authentication and/or authorization request message.

Optionally, the method 600 includes step S620: The UDM determines first parameter information. For example, the UDM searches for user subscription data based on a user identifier (for example, a permanent or temporary user identifier), and determines, based on the first indication information, at least one of a related WLAN connection QoS parameter, bandwidth at a UE granularity, and UE priority, that is, the first parameter information. The first indication information includes at least one of an access technology indication (the access technology indication indicates that the UE accesses the AMF by using a WLAN network), a location area identifier (location information of the UE), or network identifier information.

Before step S620, the method 600 further includes the following step.

Step S610': The UDR or the UDM configures the first parameter information, for example, the at least one of a WLAN connection QoS parameter, bandwidth at a UE granularity, and a UE priority, where the WLAN connection QoS parameter includes at least one of the following:
(1) a WLAN air interface QoS parameter, where the WLAN air interface QoS parameter may also be referred to as a WLAN channel access parameter, and the WLAN channel access parameter is an access parameter used to determine a WLAN air interface channel, that is, used to determine how the UE performs resource preemption on the WLAN air interface channel to implement QoS control on the WLAN air interface, where the WLAN channel access parameter includes at least one of a WLAN connection QoS identifier and a channel QoS parameter; and
(2) a correspondence between a 5G quality of service identifier (5G QoS identifier, 5QI) and a WLAN channel access parameter.

The QoS identifier of the WLAN connection may include an EDCA value, a WLAN UP value, a DSCP value, or a PCP value. The channel QoS parameter includes one or more of the following: for example, a delay, a packet loss rate, guaranteed bandwidth, maximum bandwidth, a peak rate, and a jitter.

Step S610' is the same as step S410' in the method 400, and specific content of a related parameter is the same as the description of step S410'. Details are not described herein again.

Optionally, correspondences between a plurality of groups of QoS control parameter information (for example, WLAN connection QoS parameters, bandwidth at a UE granularity, or UE priorities) and a plurality of location areas or a plurality of network identifiers are further configured in the UDR or the UDM. The correspondence indicates that the QoS control parameter information is applicable to a WLAN in a specific location area or a specific network (for example, a campus network).

For example, when the UDR or the UDM is configured with a group of QoS control parameter information used for an N3GPP access technology, the UDR or the UDM may determine the first parameter information by using the first indication information. When the UDR or the UDM is configured with the plurality of groups of QoS control parameter information of the N3GPP access technology, the UDR or the UDM needs to obtain mapping relationship information. The mapping relationship information indicates correspondences between a plurality of groups of QoS control parameter information and a plurality of identifiers. The UDR or the UDM determines, as the first parameter information based on the mapping relationship information, one group of QoS control parameter information corresponding to a first identifier. The first identifier is a related identifier that is of the N3GPP access technology and that is used by the first terminal device.

Optionally, the first identifier includes at least one of a location area identifier and a network identifier that are of the WLAN.

It should be understood that when the QoS control parameter information (for example, the WLAN connection QoS parameter, the bandwidth at a UE granularity, or the UE priority) is configured in the UDM, after receiving the request message in step S613, the UDM locally searches for a related WLAN connection QoS parameter, bandwidth at a UE granularity, or UE priority based on information included in the request message. When the QoS control parameter information is configured in the UDR, after receiving the request message in step S613, the UDM needs to obtain, from the UDR, a WLAN connection QoS parameter, bandwidth at a UE granularity, or UE priority related to information included in the request message. Alternatively, before receiving the request message in step S613, the UDM obtains a related WLAN connection QoS parameter, bandwidth at a UE granularity, or UE priority. This is not limited in this application.

Optionally, the method 600 further includes the following steps.

Step S630: The UDM obtains, from the UDR or the PCF, a QoS parameter at a service flow granularity. For example, the UDM obtains information about a correspondence between service flow description information and a WLAN connection QoS identifier (WLAN UP).

Optionally, as a substitute step of steps S630, S631, and S632, in S630', the AAA server obtains, from the UDR or the PCF based on the user identifier and by using the AAA proxy, the QoS parameter at a service flow granularity and/or a user external identifier (for example, a GPSI identifier or a user phone number), for example, obtains the information about the correspondence between service flow description information and a WLAN connection QoS identifier (WLAN UP), and/or the GPSI identifier.

Step S631: The UDM sends the user external identifier and the first parameter information to the AAA proxy, where the first parameter information includes at least one of the following: a WLAN connection QoS parameter, bandwidth at a UE granularity, a UE priority, a QFI, or a WLAN UP value. Correspondingly, the AAA proxy receives the user external identifier and the at least one of the following: a WLAN channel access parameter, bandwidth at a UE granularity, a UE priority, a service flow identifier, or a WLAN UP value.

For example, the UDM sends an authentication and/or authorization success message to the AAA proxy. The authentication and/or authorization success message includes the user external identifier (for example, the GPSI identifier or the user phone number) and the at least one of the following: a WLAN channel access parameter, bandwidth at a UE granularity, a UE priority, a QFI, or a WLAN UP value.

Optionally, the authentication and/or authorization success message further includes an authentication and/or authorization reply message, and the authentication and/or authorization success message carries the at least one of a WLAN connection QoS parameter, bandwidth at a UE granularity, a UE priority, a QFI, or a WLAN UP value.

Step S632: The AAA proxy forwards the parameter received in step S631 to the AAA server.

Step S640: The AAA server accepts or updates the first parameter information.

For example, the AAA server searches for user context information based on the user external identifier, and updates or accepts, based on the user context information in the AAA server or a local policy, the at least one of a WLAN connection QoS parameter, bandwidth at a UE granularity, a UE priority, a QFI, or a WLAN UP value sent by the UDM.

Step S650: The AAA server sends the first parameter information to the WLAN AP/AC, and correspondingly, the WLAN AP/AC receives the first parameter information.

For example, the AAA server sends the at least one of a WLAN channel access parameter, bandwidth at a UE granularity, a UE priority, a QFI, or a WLAN UP value to the WLAN AP/AC.

It should be understood that both the QFI and the WLAN UP value are included, in other words, a correspondence between a QFI and a WLAN UP value is included.

Step S651: The AAA server forwards the first parameter information from the UDM to the UE. For example, the AAA server forwards the first parameter information to the UE by using the authentication and/or authorization reply message. The QoS control parameter information includes the at least one of a WLAN connection QoS parameter, bandwidth at a UE granularity, a UE priority, a QFI, or a WLAN UP value. Correspondingly, the UE receives the first parameter information.

Optionally, the first parameter information sent by the AAA server in the authentication and/or authorization reply message is updated. Alternatively, the AAA server generates the authentication and/or authorization reply message for the UE. The authentication and/or authorization reply message carries the first parameter information confirmed by the AAA server, for example, the at least one of a WLAN connection QoS parameter, bandwidth at a UE granularity, a UE priority, a service flow identifier, or a WLAN UP value.

It should be understood that subsequent QoS control performed by the UE, the WLAN AP/AC, and the AAA server on a service flow data packet based on the foregoing parameter the same as the description of QoS control performed by the UE, the WLAN AP/AC, and the N3IWF on the service flow data packet in the method 400. Details are not described herein again.

It should be understood that the steps shown in dotted lines in the foregoing flowcharts are optional steps, and a sequence of the steps is determined based on internal logic of the method. Sequence numbers shown in the figure are merely examples, and impose no limitation on this application.

It should be further understood that the methods provided in embodiments of this application may be used independently, or may be used together. This is not limited in this application.

It should be noted that the execution body shown in FIG. 5A and FIG. 5B to FIG. 8 is merely an example, and the execution body may alternatively be a chip, a chip system, or a processor that supports the execution body to implement the methods shown in FIG. 5A and FIG. 5B to FIG. 8. This is not limited in this application.

The foregoing describes the method embodiments in embodiments of this application with reference to the accompanying drawings, and the following describes apparatus embodiments in embodiments of this application. It can be understood that the description of the method embodiments and the description of the apparatus embodiment may correspond to each other. Therefore, for a part that is not described, refer to the foregoing method embodiments.

It may be understood that in the foregoing method embodiments, the methods and operations implemented by the core network element may alternatively be implemented by a component (for example, a chip or a circuit) that can be used in the core network element. The methods and operations implemented by the N3GPP access network device may alternatively be implemented by a component (for example, a chip or a circuit) that can be used in the N3GPP access network device. The methods and operations implemented by the first terminal device may alternatively be implemented by a component (for example, a chip or a circuit) that can be used in the first terminal device. The methods and operations implemented by the N3GPP access gateway may alternatively be implemented by a component (for example, a chip or a circuit) that can be used in the N3GPP access gateway.

The foregoing mainly describes the solutions provided in embodiments of this application from a perspective of interaction between network elements. It may be understood that, to implement the foregoing functions, each network element such as a transmitting end device or a receiving end device includes corresponding hardware structures and/or software modules for performing the functions. A person skilled in the art may be aware that, with reference to the examples described in embodiments disclosed in this specification, units and algorithm steps can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, function module division may be performed on the transmitting end device or the receiving end device based on the foregoing method example. For example, function modules may be obtained through division corresponding to functions, or two or more functions may be integrated in one processing module. The integrated module may be implemented in a form of hardware, or may be implemented in a form of a software function module. It should be noted that, in embodiments of this application, the module division is used as an example, and is merely a logical function division. In actual implementation, another division manner may be used. An example in which the functional modules are obtained through division based on the corresponding functions is used below for description.

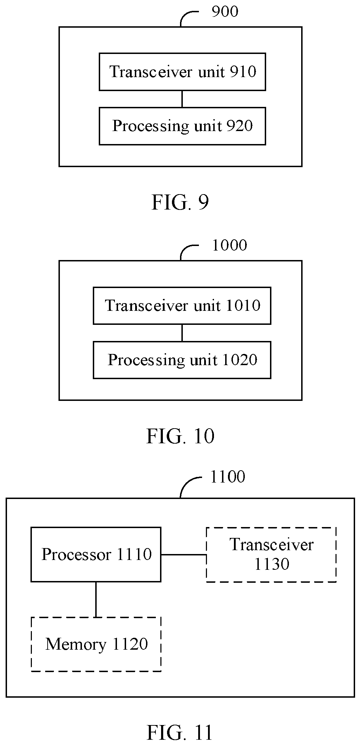

FIG. 9 is a schematic block diagram of a communication apparatus according to an embodiment of this application. The communication apparatus 900 includes a transceiver unit 910 and a processing unit 920. The transceiver unit 910 may communicate with the outside, and the processing unit 920 is configured to process data. The transceiver unit 910 may also be referred to as a communication interface or a communication unit.

Optionally, the communication apparatus 900 may further include a storage unit. The storage unit may be configured to store instructions and/or data. The processing unit 920 may read the instructions and/or the data in the storage unit.

In a case, the communication apparatus 900 may be a core network element, for example, a unified data management UDM network element or a unified data repository UDR network element. The transceiver unit 910 is configured to perform a receiving or sending operation of the core network element in the foregoing method embodiment. The processing unit 920 is configured to perform an internal processing operation of the core network element in the foregoing method embodiment.

In a design, the processing unit 920 is configured to configure first parameter information. The first parameter information is quality of service QoS control parameter information of a non-3rd generation partnership project N3GPP access technology, and the first parameter information is used to perform QoS control on a service flow data packet transmitted by a first terminal device by using the N3GPP access technology. The transceiver unit 910 is configured to send the first parameter information.

Based on the foregoing solution, in this application, a QoS control parameter of the N3GPP access technology is configured in the core network element (for example, the unified data management UDM network element and the unified data repository UDR network element), and the QoS control parameter is sent to N3GPP access sides (including an N3GPP access device and a terminal device), so that QoS control policies can be unified when the core network element and the N3GPP access side perform QoS control on the service flow data packet transmitted by using the N3GPP access technology. This improves user experience.

In a possible implementation, the first parameter information includes at least one of a connection QoS parameter of the N3GPP access technology, bandwidth at a terminal device granularity, and a terminal device priority. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

In a possible implementation, before the transceiver unit 910 sends the QoS control parameter information, the transceiver unit 910 is further configured to receive first indication information. The first indication information indicates that the first terminal device accesses the core network element by using the N3GPP access technology. The processing unit 920 is further configured to determine the first parameter information based on the first indication information.

In a possible implementation, the first indication information includes at least one of indication information of the N3GPP access technology, a location area identifier, or a network identifier.

In a possible implementation, the processing unit 920 is further configured to configure correspondences between a plurality of location area identifiers and a plurality of groups of QoS control parameter information, and/or correspondences between a plurality of network identifiers and a plurality of groups of QoS control parameter information.

In a possible implementation, the processing unit 920 is further configured to obtain mapping relationship information. The mapping relationship information indicates correspondences between a plurality of groups of QoS control parameter information and a plurality of identifiers. The processing unit 920 is further configured to determine, as the first parameter information based on the mapping relationship information, QoS control parameter information corresponding to a first identifier. The first identifier is a related identifier that is of the N3GPP access technology and that is used by the first terminal device.

In a possible implementation, the first identifier includes at least one of the location area identifier and the network identifier.

In another case, the communication apparatus 900 may be a component configured in the core network element, for example, a chip in the core network element.

In this case, the transceiver unit 910 may be an interface circuit, a pin, or the like. Specifically, the interface circuit may include an input circuit and an output circuit, and the processing unit 920 may include a processing circuit.

Optionally, the transceiver unit 910 may be a radio frequency module. The processing unit 920 may be a baseband module. The radio frequency module is mainly configured to: receive and send radio frequency signals, and perform conversion between a radio frequency signal and a baseband signal. The baseband module is mainly configured to: perform baseband processing, control a base station, and the like.

FIG. 10 is a schematic block diagram of a communication apparatus according to an embodiment of this application. The communication apparatus 1000 includes a transceiver unit 1010 and a processing unit 1020. The transceiver unit 1010 may communicate with the outside, and the processing unit 1020 is configured to process data. The transceiver unit 1010 may also be referred to as a communication interface or a communication unit.

Optionally, the communication apparatus 1000 may further include a storage unit. The storage unit may be configured to store instructions and/or data. The processing unit 1020 may read the instructions and/or the data in the storage unit.

In a case, the communication apparatus 1000 may be an N3GPP access network device. The transceiver unit 1010 is configured to perform a receiving or sending operation of the N3GPP access network device in the foregoing method embodiment. The processing unit 1020 is configured to perform an internal processing operation of the N3GPP access network device in the foregoing method embodiment.

In a possible implementation, the transceiver unit 1010 is configured to receive first parameter information. The first parameter information is QoS control parameter information of an N3GPP access technology. The processing unit 1020 is configured to perform, based on the first parameter information, QoS control on a service flow data packet transmitted by a first terminal device by using the N3GPP access technology.

Based on the foregoing solution, the N3GPP access network device may locally prestore or configure QoS control parameter information. The prestored or configured QoS control parameter information may be inconsistent with QoS control parameter information delivered by a core network element. Therefore, the N3GPP access network device performs, based on the QoS control parameter information that is received from the core network element and that is used for the N3GPP access technology, QoS control on the service flow data packet transmitted by the first terminal device by using the N3GPP access technology. In this way, QoS control policies of the core network element and an N3GPP access side that are in the N3GPP access technology can be unified, thereby improving user experience.

In a possible implementation, the transceiver unit 1010 is further configured to receive a first terminal identifier from an N3GPP access gateway. The first terminal identifier is an identifier of the terminal device in an N3GPP access network. The processing unit 1020 is further configured to determine the service flow data packet based on the first terminal identifier.

In a possible implementation, the first parameter information includes at least one of a connection QoS parameter of the N3GPP access technology, bandwidth at a terminal device granularity, and a terminal device priority. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

In a possible implementation, the transceiver unit 1010 is further configured to receive information about a correspondence between service flow description information and an N3GPP connection QoS identifier. The service flow description information is used to determine the service flow data packet.

In a possible implementation, the channel access parameter includes a correspondence between an N3GPP connection QoS identifier and a channel QoS parameter. The processing unit 1020 is specifically configured to determine a channel QoS parameter of the service flow data packet according to the correspondence between service flow description information and an N3GPP connection QoS identifier, and the correspondence between an N3GPP connection QoS identifier and a channel QoS parameter. The processing unit 1020 is further configured to perform, based on the channel QoS parameter, QoS control on the service flow data packet transmitted when the terminal device accesses a core network by using the N3GPP access technology.

It may be understood that the communication apparatus 1000 may alternatively be a component configured in the N3GPP access network device, for example, a chip in the N3GPP access network device.

In this case, the transceiver unit 1010 may be an interface circuit, a pin, or the like. Specifically, the interface circuit may include an input circuit and an output circuit, and the processing unit 1020 may include a processing circuit.

In another case, the communication apparatus 1000 may be an N3GPP access gateway. The transceiver unit 1010 is configured to perform a receiving or sending operation of the N3GPP access gateway in the foregoing method embodiment. The processing unit 1020 is configured to perform an internal processing operation of the N3GPP access gateway in the foregoing method embodiment.

In a possible implementation, the transceiver unit 1010 receives first parameter information. The first parameter information is quality of service QoS control parameter information of an N3GPP access technology. The transceiver unit 1010 is further configured to send the QoS control parameter information to an N3GPP access network device or a terminal device. The first parameter information is used to perform QoS control on a service flow data packet transmitted by the first terminal device by using the N3GPP access technology.

In a possible implementation, the processing unit 1020 is configured to determine a first terminal identifier. The first terminal identifier is an identifier of the first terminal device in an N3GPP access network. The transceiver unit 1010 is further configured to send the first terminal identifier to the N3GPP access network device.

In a possible implementation, the first parameter information includes at least one of a connection QoS parameter of the N3GPP access technology, bandwidth at a terminal device granularity, and a terminal device priority. The connection QoS parameter includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

In a possible implementation, the processing unit 1020 is specifically configured to determine information about a correspondence between service flow description information and an N3GPP connection QoS identifier. The service flow description information is used to determine the service flow data packet. The transceiver unit 1010 is further configured to send the information about the correspondence between service flow description information and an N3GPP connection QoS identifier to the first terminal device or the N3GPP access network device.

In a possible implementation, the processing unit 1020 is specifically configured to determine the information about the correspondence between service flow description information and an N3GPP connection QoS identifier according to a correspondence between service flow description information and a 5QI, and the correspondence between a 5QI and a channel access parameter.

It may be understood that the communication apparatus 1000 may alternatively be a component configured in the N3GPP access gateway, for example, a chip in the N3GPP access gateway.

In this case, the transceiver unit 1010 may be an interface circuit, a pin, or the like. Specifically, the interface circuit may include an input circuit and an output circuit, and the processing unit 1020 may include a processing circuit.

In still another case, the communication apparatus 1000 may be a first terminal device. The transceiver unit 1010 is configured to perform a receiving or sending operation of the first terminal device in the foregoing method embodiment. The processing unit 1020 is configured to perform an internal processing operation of the first terminal device in the foregoing method embodiment.

In a possible implementation, the transceiver unit 1010 is configured to receive first parameter information. The first parameter information is QoS control parameter information of a non-3rd generation partnership project N3GPP access technology. The processing unit 1020 is configured to perform, based on the first parameter information, QoS control on a service flow data packet transmitted by the first terminal device by using the N3GPP access technology.

Based on the foregoing solution, the first terminal device performs, based on the QoS control parameter information that is received from a core network element and that is used for the N3GPP access technology, QoS control on the service flow data packet transmitted by the first terminal device by using the N3GPP access technology. In this way, QoS control policies in the N3GPP access technology can be unified, thereby improving user experience.

In a possible implementation, the first parameter information includes at least one of a connection QoS parameter of the N3GPP access technology, and bandwidth at a terminal device granularity. The connection QoS parameter of the N3GPP access technology includes at least one of the following: a channel access parameter of the N3GPP access technology, and a correspondence between a 5G QoS identifier and a channel access parameter of an N3GPP access technology. The channel access parameter of the N3GPP access technology includes at least one of an N3GPP connection QoS identifier and a channel QoS parameter.

In a possible implementation, the service flow data packet includes a first terminal identifier, and the first terminal identifier is an identifier of the terminal device in an N3GPP access network.

In a possible implementation, the channel access parameter includes a correspondence between an N3GPP connection QoS identifier and a channel QoS parameter. The processing unit is specifically configured to determine the channel QoS parameter based on the N3GPP connection QoS identifier. The processing unit is further configured to perform, based on the channel QoS parameter, QoS control on the service flow data packet transmitted by the terminal device by using the N3GPP access technology.

In a possible implementation, the transceiver unit 1010 is specifically configured to receive information about a correspondence between an N3GPP connection QoS identifier and service flow description information. The processing unit 1020 is specifically configured to determine, based on the service flow description information and the information about the correspondence between an N3GPP connection QoS identifier and service flow description information, an N3GPP connection QoS identifier corresponding to the service flow data packet.

It may be understood that the communication apparatus 1000 may alternatively be a component configured in the first terminal device, for example, a chip in the first terminal device.

In this case, the transceiver unit 1010 may be an interface circuit, a pin, or the like. Specifically, the interface circuit may include an input circuit and an output circuit, and the processing unit 1020 may include a processing circuit.

As shown in FIG. 11, an embodiment of this application further provides a communication apparatus 1100. The communication apparatus 1100 includes a processor 1110. The processor 1110 is coupled to a memory 1120. The memory 1120 is configured to store a computer program or instructions and/or data. The processor 1110 is configured to execute the computer program or instructions and/or data stored in the memory 1120, so that the methods in the foregoing method embodiments are executed.

Optionally, the communication apparatus 1100 includes one or more processors 1110.

Optionally, as shown in FIG. 11, the communication apparatus 1100 may further include the memory 1120.

Optionally, the communication apparatus 1100 may include one or more memories 1120.

Optionally, the memory 1120 and the processor 1110 may be integrated together, or separately disposed.

Optionally, as shown in FIG. 11, the communication apparatus 1100 may further include a transceiver 1130 and/or a communication interface, and the transceiver 1130 and/or the communication interface are/is configured to receive and/or send a signal. For example, the processor 1110 is configured to control the transceiver 1130 to receive and/or send a signal.

It should be understood that the communication interface used by a core network element for communication. For example, the communication interface is used by the core network element to communicate with an N3GPP access network device or another core network element.

In a solution, the communication apparatus 1100 is configured to perform the operations performed by the core network element in the foregoing method embodiments.

For example, the processor 1110 is configured to implement an operation performed internally by the core network element in the foregoing method embodiments, and the transceiver 1130 is configured to implement a receiving or sending operation performed by the core network element in the foregoing method embodiments. The processing unit 920 in the apparatus 900 may be the processor in FIG. 11, and the transceiver unit 910 may be the transceiver and/or the communication interface in FIG. 11. For specific operations performed by the processor 1110, refer to the foregoing description of the processing unit 920. For operations performed by the transceiver 1130, refer to the description of the transceiver unit 910. Details are not described herein again.

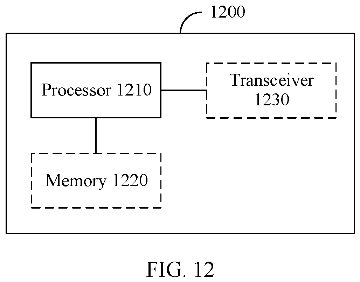

As shown in FIG. 12, an embodiment of this application further provides a communication apparatus 1200. The communication apparatus 1200 includes a processor 1210. The processor 1210 is coupled to a memory 1220. The memory 1220 is configured to store a computer program or instructions and/or data. The processor 1210 is configured to execute the computer program or instructions and/or data stored in the memory 1220, so that the methods in the foregoing method embodiments are executed.

Optionally, the communication apparatus 1200 includes one or more processors 1210.

Optionally, as shown in FIG. 12, the communication apparatus 1200 may further include the memory 1220.

Optionally, the communication apparatus 1200 may include one or more memories 1220.

Optionally, the memory 1220 and the processor 1210 may be integrated together, or separately disposed.

Optionally, as shown in FIG. 12, the communication apparatus 1200 may further include a transceiver 1230 and/or a communication interface, and the transceiver 1230 and/or the communication interface are/is configured to receive and/or send a signal. For example, the processor 1210 is configured to control the transceiver 1230 and/or the communication interface to receive and/or send a signal.

In a solution, the communication apparatus 1200 is configured to perform the operations performed by the N3GPP access network device in the foregoing method embodiments. For example, the processor 1210 is configured to implement an operation performed internally by the N3GPP access network device in the foregoing method embodiments, and the communication interface is configured to implement a receiving or sending operation performed by the N3GPP access network device in the foregoing method embodiments. The processing unit 1020 in the apparatus 1000 may be the processor in FIG. 12, and the transceiver unit 1010 may be the communication interface. For specific operations performed by the processor 1210, refer to the foregoing description of the processing unit 1020. For operations performed by the communication interface, refer to the description of the transceiver unit 1010. Details are not described herein again.

In another solution, the communication apparatus 1200 is configured to perform the operations performed by the N3GPP access gateway in the foregoing method embodiments. For example, the processor 1210 is configured to implement an operation performed internally by the N3GPP access gateway in the foregoing method embodiments, and the transceiver 1230 is configured to implement a receiving or sending operation performed by the N3GPP access gateway in the foregoing method embodiments. The processing unit 1020 in the apparatus 1000 may be the processor in FIG. 12, and the transceiver unit 1010 may be the transceiver in FIG. 12. For specific operations performed by the processor 1210, refer to the foregoing description of the processing unit 1020. For operations performed by the transceiver 1230, refer to the description of the transceiver unit 1010. Details are not described herein again.

In still another solution, the communication apparatus 1200 is configured to perform the operations performed by the first terminal device in the foregoing method embodiments. For example, the processor 1210 is configured to implement an operation performed internally by the first terminal device in the foregoing method embodiments, and the transceiver 1230 is configured to implement a receiving or sending operation performed by the first terminal device in the foregoing method embodiments. The processing unit 1020 in the apparatus 1000 may be the processor in FIG. 12, and the transceiver unit 1010 may be the transceiver in FIG. 12. For specific operations performed by the processor 1210, refer to the foregoing description of the processing unit 1020. For operations performed by the transceiver 1230, refer to the description of the transceiver unit 1010. Details are not described herein again.

An embodiment of this application further provides a computer-readable storage medium. The computer-readable storage medium stores computer instructions of the method performed by the core network element, the method performed by the N3GPP access network device, the method performed by the N3GPP access gateway, or the method performed by the first terminal device in the foregoing method embodiments.

For example, when a computer program is executed by a computer, the computer is enabled to implement the method performed by the core network element, the method performed by the N3GPP access network device, the method performed by the N3GPP access gateway, or the method performed by the first terminal device in the foregoing method embodiments.

An embodiment of this application further provides a computer program product including instructions. When the instructions are executed by a computer, the computer is enabled to implement the method performed by the core network element, the method performed by the N3GPP access network device, the method performed by the N3GPP access gateway, or the method performed by the first terminal device in the foregoing method embodiments.

An embodiment of this application further provides a communication system. The communication system includes the core network element, the N3GPP access network device, and the first terminal device in the foregoing embodiments. Optionally, the communication system includes the N3GPP access gateway in the foregoing embodiments.

For explanations and beneficial effects of related content of any communication apparatus provided above, refer to a corresponding method embodiment provided above. Details are not described herein again.

In embodiments of this application, the core network element, the N3GPP access network device, the N3GPP access gateway, or the first terminal device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant communication software.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be executed by the core network element, the N3GPP access network device, the first terminal device, or the N3GPP access gateway, or by a function module that is in the core network element, the N3GPP access network device, the first terminal device, or the N3GPP access gateway and that can invoke and execute the program.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, the components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

It should be further understood that "first", "second", and various numbers in this specification are merely used for differentiation for ease of description, and are not construed as a limitation to the scope of embodiments of this application.

It should be understood that, the term "and/or" in this specification describes only an association relationship between associated objects, and indicates that three relationships may exist. For example, A and/or B may indicate the following three cases: Only A exists, both A and B exist, and only B exists.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed systems, apparatuses, and methods may be implemented in other manners. For example, the apparatus embodiments described above are merely examples. For example, the unit division is merely logical function division. The units described as separate parts may or may not be physically separate, and parts shown as units may or may not be physical units, that is, may be located in one place, or may be distributed on a plurality of network units. Some or all of the units may be selected based on an actual requirement to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The computer-readable storage medium may be any usable medium accessible to a computer. For example, the computer-readable medium may include but is not limited to a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disk storage, a magnetic disk storage medium, another magnetic storage device, or any other medium that can carry or store expected program code in a form of instructions or a data structure and that can be accessed by a computer. In addition, by way of example but not limitative description, RAMs in a plurality of forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing description is merely a specific implementation of this application, but is not intended to limit the protection scope of embodiments of this application. Any variation or replacement readily figured out by a person skilled in and familiar with the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
configuring, by a core network element, first parameter information, wherein the first parameter information is quality of service QoS control parameter information of a non-3rd generation partnership project N3GPP access technology, and the first parameter information is used to perform QoS control on a service flow data packet transmitted by a first terminal device by using the N3GPP access technology; and
sending, by the core network element, the first parameter information.

2. The method according to claim 1, wherein the first parameter information comprises:
at least one of a connection QoS parameter of the N3GPP access technology, bandwidth at a terminal device granularity, and a terminal device priority, wherein the connection QoS parameter comprises at least one of the following:
a channel access parameter of the N3GPP access technology, wherein the channel access parameter of the N3GPP access technology comprises at least one of an N3GPP connection QoS identifier and a channel QoS parameter; and
a correspondence between a 5G QoS identifier and a channel access parameter of an N3GPP access technology.

3. The method according to claim 1 or 2, wherein before the sending, by the core network element, the first parameter information, the method further comprises:
receiving, by the core network element, first indication information, wherein the first indication information indicates that the first terminal device accesses the core network element by using the N3GPP access technology; and
the configuring, by a core network element, first parameter information comprises:
determining, by the core network element, the first parameter information based on the first indication information.

4. The method according to claim 1 or 2, wherein the method further comprises:
obtaining, by the core network element, mapping relationship information, wherein the mapping relationship information indicates correspondences between a plurality of groups of QoS control parameter information and a plurality of identifiers; and
the configuring, by a core network element, first parameter information comprises:
determining, by the core network element as the first parameter information based on the mapping relationship information, QoS control parameter information corresponding to a first identifier, wherein the first identifier is a related identifier that is of the N3GPP access technology and that is used by the first terminal device.

5. The method according to claim 4, wherein the first identifier comprises at least one of a location area identifier and a network identifier.

6. A communication method, comprising:
receiving, by a non-3rd generation partnership project N3 GPP access network device, first parameter information, wherein the first parameter information is quality of service QoS control parameter information of an N3GPP access technology; and
performing, by the N3GPP access network device based on the first parameter information, QoS control on a service flow data packet transmitted by a first terminal device by using the N3GPP access technology.

7. The method according to claim 6, wherein the method further comprises:
receiving, by the N3GPP access network device, a first terminal identifier from an N3GPP access gateway, wherein the first terminal identifier is an identifier of the first terminal device in an N3GPP access network; and
determining, by the N3GPP access network device, the service flow data packet based on the first terminal identifier.

8. The method according to claim 6 or 7, wherein the first parameter information comprises:
at least one of a connection QoS parameter of the N3GPP access technology, bandwidth at a terminal device granularity, and a terminal device priority, wherein the connection QoS parameter comprises at least one of the following:
a channel access parameter of the N3GPP access technology, wherein the channel access parameter of the N3GPP access technology comprises at least one of an N3GPP connection QoS identifier and a channel QoS parameter; and
a correspondence between a 5G QoS identifier and a channel access parameter of an N3GPP access technology.

9. The method according to any one of claims 6 to 8, wherein the method further comprises:
receiving, by the N3GPP access network device, information about a correspondence between service flow description information and an N3GPP connection QoS identifier, wherein the service flow description information is used to determine the service flow data packet.

10. The method according to claim 9, wherein the channel access parameter of the N3GPP access technology comprises a correspondence between an N3GPP connection QoS identifier and a channel QoS parameter, and the performing, by the N3GPP access network device based on the quality of service QoS control parameter information, QoS control on a service flow data packet transmitted by a first terminal device by using the N3GPP access technology comprises:
determining, by the N3GPP access network device, a channel QoS parameter of the service flow data packet according to the correspondence between service flow description information and an N3GPP connection QoS identifier, and the correspondence between an N3GPP connection QoS identifier and a channel QoS parameter; and
performing, by the N3GPP access network device based on the channel QoS parameter, QoS control on the service flow data packet transmitted by the first terminal device by using the N3GPP access technology.

11. A communication method, comprising:
receiving, by a first terminal device, first parameter information, wherein the first parameter information is QoS control parameter information of a non-3rd generation partnership project N3GPP access technology; and
performing, by the first terminal device based on the first parameter information, QoS control on a service flow data packet transmitted by the first terminal device by using the N3GPP access technology.

12. The method according to claim 11, wherein the first parameter information comprises:
at least one of a connection QoS parameter of the N3GPP access technology and bandwidth at a terminal device granularity, wherein the connection QoS parameter comprises at least one of the following:
a channel access parameter of the N3GPP access technology, wherein the channel access parameter of the N3GPP access technology comprises at least one of an N3GPP connection QoS identifier and a channel QoS parameter; and
a correspondence between a 5G QoS identifier and a channel access parameter of an N3GPP access technology.

13. The method according to claim 11 or 12, wherein the service flow data packet comprises a first terminal identifier, and the first terminal identifier is an identifier of the first terminal device in an N3GPP access network.

14. The method according to any one of claims 11 to 13, wherein the channel access parameter of the N3GPP access technology comprises a correspondence between an N3GPP connection QoS identifier and a channel QoS parameter, and the performing, by the first terminal device based on the first parameter information, QoS control on a service flow data packet transmitted by the first terminal device by using the N3GPP access technology comprises:
determining, by the first terminal device, the channel QoS parameter based on the N3GPP connection QoS identifier; and
performing, by the first terminal device based on the channel QoS parameter, QoS control on the service flow data packet transmitted by the first terminal device by using the N3GPP access technology.

15. The method according to claim 14, wherein the method further comprises:
receiving, by the first terminal device, information about a correspondence between an N3GPP connection QoS identifier and service flow description information; and
determining, by the first terminal device based on the service flow description information and the information about the correspondence between an N3GPP connection QoS identifier and service flow description information, an N3GPP connection QoS identifier corresponding to the service flow data packet.

16. A communication apparatus, comprising a module configured to perform the method according to any one of claims 1 to 5, comprising a module configured to perform the method according to any one of claims 6 to 10, or comprising a module configured to perform the method according to any one of claims 11 to 15.

17. A communication apparatus, comprising a processor and a memory, wherein the memory is configured to store one or more computer programs, and when the one or more computer programs are run, the method according to any one of claims 1 to 5 is performed, the method according to any one of claims 6 to 10 is performed, or the method according to any one of claims 11 to 15 is performed.

18. A communication system, wherein the communication system comprises a core network element, an N3GPP access network device, and a first terminal device; and the core network element is configured to perform the method according to any one of claims 1 to 5, the N3GPP access network device is configured to perform the method according to any one of claims 6 to 10, and the first terminal device is configured to perform the method according to any one of claims 11 to 15.

19. A computer-readable storage medium, wherein the computer-readable storage medium is configured to store a computer program, and when the computer program is run on a computer, the computer is enabled to perform the method according to any one of claims 1 to 5, the computer is enabled to perform the method according to any one of claims 6 to 10, or the computer is enabled to perform the method according to any one of claims 11 to 15.

20. A computer program product, wherein the computer program product comprises computer program code, and when the computer program code is run, the method according to any one of claims 1 to 5 is implemented, the method according to any one of claims 6 to 10 is implemented, or the method according to any one of claims 11 to 15 is implemented.
